(19) **Europäisches Patentamt / European Patent Office / Office européen des brevets**

(11) **EP 4 779 006 A1**

(12) # EUROPEAN PATENT APPLICATION
published in accordance with Art. 153(4) EPC

(43) Date of publication:
**22.07.2026 Bulletin 2026/30**

(21) Application number: **24865533.4**

(22) Date of filing: **12.09.2024**

(51) International Patent Classification (IPC):
$C11D\ 3/50$ (2006.01)   $B01J\ 13/22$ (2006.01)
$C11B\ 9/00$ (2006.01)   $D06M\ 11/56$ (2006.01)
$D06M\ 11/57$ (2006.01)   $D06M\ 13/00$ (2006.01)
$D06M\ 23/12$ (2006.01)

(52) Cooperative Patent Classification (CPC):
**B01J 13/16; B01J 13/22; C11B 9/00; C11D 3/50;
D06L 1/12; D06M 11/52; D06M 11/56; D06M 11/57;
D06M 13/00; D06M 23/12**

(86) International application number:
**PCT/JP2024/032741**

(87) International publication number:
**WO 2025/058033 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023   JP 2023149464**
**14.09.2023   JP 2023149465**

(71) Applicant: **Kao Corporation**
**Tokyo 103-8210 (JP)**

(72) Inventors:
• **MORITAKA, Mineho**
**Tokyo 103-8210 (JP)**

• **SAKODA, Daichi**
**Tokyo 103-8210 (JP)**
• **MATSUBAYASHI, Keiichi**
**Tokyo 103-8210 (JP)**
• **KANAO, Tomoki**
**Tokyo 103-8210 (JP)**
• **KAGAWA, Akira**
**Tokyo 103-8210 (JP)**
• **NONAKA, Nobuhiro**
**Tokyo 103-8210 (JP)**
• **KAWAMOTO, Kenichiro**
**Tokyo 103-8210 (JP)**

(74) Representative: **Hoffmann Eitle
Patent- und Rechtsanwälte PartmbB
Arabellastraße 30
81925 München (DE)**

(54) ## PERFUME DELIVERY PARTICLES

(57)   A fragrance delivery particle for a textile product is provided.

A fragrance delivery particle containing (A) a water-soluble solid [hereinafter component (A)] and (B) a fragrance [hereinafter component (B)], wherein component (B) includes (B1) a microencapsulated fragrance [hereinafter component (B1)] and (B2) a non-microencapsulated fragrance [hereinafter component (B2)], and a moisture content of the fragrance delivery particle according to the Karl Fischer gas-phase method (JIS K 0113) is 1 mass% or more and 35 mass% or less.

EP 4 779 006 A1

**Description**

Field of the Invention

The present invention relates to a fragrance delivery particle, a method for producing a fragrance delivery particle, and a method for imparting a scent to a textile product.

Background of the Invention

In recent years, research has been conducted on technologies for applying fragrances having the function of scent-imparting, sterilizing, disinfecting, sanitizing, and UV protecting, or the like to clothing using an auxiliary component other than a detergent during a laundering process of the clothing. In particular, attempts have been made to add a granular composition, i.e., fragrance delivery particles, in which the fragrances are supported on a solid carrier, separately from the detergent during the laundering process to allow fragrance components to adhere to the clothing.

JP-A 2020-512452 discloses a technology of granulated powder in which microcapsules that encapsulate a beneficial material or a perfume are supported on a solid carrier. JP-A H1-188597 discloses a technology of fragrance powder in which anhydrous magnesium sulfate is impregnated with a fragrance emulsion. JP-A 2021-529869 discloses a technology of perfume-containing particles that contain polyethylene glycol, a water-soluble filler, and a perfume ingredient.

Summary of the Invention

When such fragrance delivery particles are used in the laundering process, it is necessary that the fragrances remain on the textile product even after a step of removing dirt with washing components or a rinsing step of removing the washing components during washing. Therefore, there is a need for a method whereby the fragrance delivery particles are not dissolved in the presence of the washing components, but dissolved during the rinsing stage. The above fragrance delivery particles pose the problem of remaining undissolved at the end of the laundering process. On the other hand, if the fragrance delivery particles dissolve too quickly during the laundering process, the fragrances are less likely to remain on the textile product at the end of the laundering process. Therefore, a technology whereby the fragrances sufficiently remain on the textile product at the end of the laundering process is required. Further, when microcapsules and non-microencapsulated fragrance components [hereinafter referred to as external fragrances] are used together, a problem arises in that adsorptivity of the microcapsules onto fibers decreases, resulting in a significantly reduced effect of the microcapsules. Therefore, the problem to be solved by the present invention is to provide fragrance delivery particles with a technology that allows the fragrances and the microcapsules to sufficiently remain on the textile product at the end of the laundering process.

In an embodiment, the present invention provides a fragrance delivery particle containing (A) a water-soluble solid [hereinafter component (A)] and (B) a fragrance [hereinafter component (B)], wherein component (B) includes (B1) a microencapsulated fragrance [hereinafter component (B1)] and (B2) a non-microencapsulated fragrance [hereinafter component (B2)], and a moisture content of the fragrance delivery particle according to the Karl Fischer gas-phase method (JIS K 0113) is 1 mass% or more and 35 mass% or less.

Further, in another embodiment, the present invention provides a method for producing a fragrance delivery particle, including mixing (A) a water-soluble solid [hereinafter component (A)] and (B) a fragrance [hereinafter component (B)], wherein component (B) includes (B1) a microencapsulated fragrance [hereinafter component (B1)] and (B2) a non-microencapsulated fragrance [hereinafter component (B2)], and a moisture content of the fragrance delivery particle according to the Karl Fischer gas-phase method (JIS K 0113) is 1 mass% or more and 35 mass% or less.

The present invention can provide a fragrance delivery particle that can allow much fragrance to remain on a textile product even after a washing step or a rinsing step in a laundering process of the textile product. Further, a fragrance delivery particle that can impart preferable scent quality to a textile product can be provided.

Embodiments of the Invention

[Fragrance delivery particle]

The fragrance delivery particle of the present invention contains (A) a water-soluble solid [hereinafter component (A)] and (B) a fragrance [hereinafter component (B)], wherein a moisture content of the fragrance delivery particle according to the Karl Fischer gas-phase method (JIS K 0113) is 1 mass% or more and 35 mass% or less.

<Component (A)>

The water-soluble solid of component (A) may have, for example, a solubility of 1.0 g or more, preferably a solubility of 1.0 g or more and 60 g or less, in 100 g of water at 20°C.

Component (A) may have pores in its surface, and an average pore size of the same may be, for example, preferably 1 nm or more, more preferably 10 nm or more from the viewpoints of storage stability and more increased strength of the fragrance delivery particle, and preferably 1000 $\mu$m or less, more preferably 100 $\mu$m or less from the viewpoint of strength of the obtained fragrance delivery particle. The average pore size of the pores present in the surface of component (A) can be determined by carrying out a measurement according to mercury intrusion porosimetry using a mercury porosimeter (for example, AutoPore IV 9500 (manufactured by Shimadzu Corporation)) and calculating the average pore size value using Average Pore Diameter (4V/A).

Component (A) may have, for example, preferably a bulk density of 450 g/L or more, more preferably a bulk density of 500 g/L or more from the viewpoint of more increased strength of the fragrance delivery particle, and preferably a bulk density of 750 g/L or less, more preferably a bulk density of 650 g/L or less from the viewpoint of solubility. The bulk density of component (A) is calculated using an apparent density tester in accordance with JIS K 7365.

Component (A) may have, for example, an average particle size of preferably 1.0 mm or more, more preferably 3.0 mm or more, and an average particle size of preferably 20 mm or less, more preferably 15 mm or less, further preferably 10 mm or less, furthermore preferably 5 mm or less. The average particle size can be measured by calculating the sphere-equivalent diameters of 250 particles using the image analysis software Image J.

Examples of component (A) include a water-soluble inorganic salt, and for example, one or more selected from a water-soluble inorganic sulfate such as magnesium sulfate, sodium sulfate, or the like, a water-soluble inorganic chloride such as sodium chloride, magnesium chloride, or the like, and a water-soluble inorganic carbonate such as sodium carbonate or the like are preferable. Component (A) may be, for example, preferably a water-soluble inorganic sulfate, more preferably magnesium sulfate from the viewpoint of preventing the quality of a fragrance from changing.

Component (A) can be prepared by drying, for example, a water-soluble solid carrier, preferably a water-soluble inorganic salt with water of crystallization.

As an embodiment, component (A) can be prepared by drying a water-soluble solid carrier, preferably a water-soluble inorganic salt with water of crystallization, with a moisture content according to an infrared moisture meter of more than 20 mass%. Examples of the water-soluble solid carrier, preferably the water-soluble inorganic salt with water of crystallization include, for example, a water-soluble inorganic sulfate such as magnesium sulfate, sodium sulfate, or the like (preferably a water-soluble inorganic sulfate with water of crystallization), a water-soluble inorganic chloride such as sodium chloride, magnesium chloride, or the like (preferably a water-soluble inorganic chloride with water of crystallization), and others. The water-soluble solid carrier may be, for example, preferably a water-soluble inorganic sulfate, more preferably a water-soluble inorganic sulfate with water of crystallization, further preferably magnesium sulfate with water of crystallization from the viewpoint of preventing the quality of a fragrance compound from changing.

Further, for example, a water-soluble solid with a moisture content according to an infrared moisture meter of 0.1 mass% or more and 20 mass% or less can be used as component (A) from the viewpoint of more increased strength of the fragrance delivery particle and the viewpoint of storage stability.

When the water-soluble solid with a moisture content according to an infrared moisture meter of 0.1 mass% or more and 20 mass% or less is used as component (A), the moisture content according to an infrared moisture meter is, for example, preferably 1 mass% or more, and may be more preferably 1.6 mass% or more, further preferably 2.0 mass% or more, furthermore preferably 5 mass% or more, furthermore preferably 8 mass% or more from the viewpoint of more increased strength of the fragrance delivery particle, and preferably 20 mass% or less, more preferably 18 mass% or less, further preferably 15 mass% or less from the viewpoint of storage stability.

On the other hand, when the water-soluble solid with a moisture content according to an infrared moisture meter of 0.1 mass% or more and 20 mass% or less is used as component (A), the moisture content according to an infrared moisture meter may be, for example, preferably 1 mass% or more, more preferably 1.6 mass% or more, further preferably 2.0 mass% or more, furthermore preferably 5 mass% or more, furthermore preferably 8 mass% or more from the viewpoint of better scent quality, and preferably 20 mass% or less, more preferably 18 mass% or less, further preferably 15 mass% or less, further preferably 14 mass% or less from the same viewpoint.

When the water-soluble solid with a moisture content according to an infrared moisture meter of 0.1 mass% or more and 20 mass% or less is used as component (A), the moisture content of component (A) may be measured, for example, using an infrared moisture meter. For example, it can be measured using an infrared moisture meter (for example, MOC63u manufactured by Shimadzu Corporation) at a measurement temperature of 105°C. The moisture content calculated here means the moisture content of the water-soluble solid. The moisture content of component (A) (mass%) is calculated on the basis of the following formula by measuring the mass of the water-soluble solid before and after drying using the infrared moisture meter.

moisture content (mass%) = {mass before drying (g) - mass after drying (g)} / mass before drying (g)

Further, component (A) can be prepared, for example, by drying a water-soluble solid. As an embodiment of component (A), a water-soluble solid with a moisture content according to an infrared moisture meter of more than 20 mass% may be used after being dried to adjust the moisture content according to an infrared moisture meter to be in a range of 0.1 mass% or more and 20 mass% or less.

A content of component (A) in 100 mass% of the fragrance delivery particle of the present invention may be, for example, preferably 50 mass% or more, more preferably 70 mass% or more, further preferably 75 mass% or more, and preferably 99 mass% or less, more preferably 95 mass% or less, further preferably 93 mass% or less, furthermore preferably 90 mass% or less from the viewpoint of solubility.

<Component (B)>

The fragrance of component (B) includes, for example, (B1) a microencapsulated fragrance [hereinafter component (B1)] and (B2) a non-microencapsulated fragrance [hereinafter component (B2)].

The "fragrance" as used herein is not particularly limited, provided that it is one or more selected from a fragrance and a fragrance precursor. As the fragrance, for example, a fragrance compound described in Motoki Nakajima, "Basic Knowledge of Fragrances and Fragrance Blending," 4th printing, Sangyo Tosho Publishing Co., Ltd., April 20, 2005, or a fragrance compound known to be incorporated into a fabric softener in a patent literature or the like can be used. The fragrance compound may be a single fragrance compound or may be a mixture of two or more fragrance compounds. Further, as the fragrance compound, a fragrance component or a fragrance composition uniquely prepared or blended by a fragrance manufacturer can be used. Note that the fragrance may be the single fragrance compound or may be a fragrance composition obtained by mixing the two or more fragrance compounds, and the fragrance composition may include a fragrance diluent or a solvent in addition to the fragrance compounds. Further, the fragrance precursor can be used as the fragrance.

The fragrance compound that can be used for component (B) may have a ClogP of, for example, preferably 1.0 or more, more preferably 1.5 or more, further preferably 2.0 or more, furthermore preferably 2.3 or more, furthermore preferably 2.5 or more, and preferably 30 or less, more preferably 20 or less, further preferably 10 or less, furthermore preferably 6.0 or less, furthermore preferably 5.5 or less, furthermore preferably 5.0 or less. If the ClogP value is in such a range, good supporting/retention on component (A) is achieved. The term "supporting" as used herein means the state where component (B), preferably component (B1) adheres to the surface of component (A), preferably the outer surface of component (A), or the state where component (B), preferably component (B2) adheres to the inside of component (A), preferably the inner surface of the pores leading from the outer surface of component (A) to the inside [also referred to as the inside of the pores of component (A)]. Further, the term "supporting/retention" as used herein means that volatilization or leak (leakage) of component (B), preferably the encapsulated component of component (B1), or component (B2) is suppressed while component (B) is supported on component (A).

Here, the logP value is the logarithm value of the partition coefficient of 1-octanol/water of a compound. It means the ratio between the equilibrium concentrations of a solute-a compound dissolved as a solute in a two-liquid-phase solvent system of 1-octanol and water-in the respective solvents in the partition equilibrium. It is generally expressed as the logarithm "logP" to base 10. The logP value can be calculated using the program "CLOGP" (Daylight CIS) or the like. In the program "CLOGP," the logP value is "Calculated logP (ClogP)" calculated using the method described in A. Leo, "Comprehensive Medicinal Chemistry," Vol. 4, (C. Hansch, P.G. Sammes, J.B. Taylor, and C.A. Ramsden, Eds.), p. 295, Pergamon Press, 1990, and is the ClogP value calculated using the program CLOGP v4.01. When component (B) includes multiple fragrances, the ClogP value of the fragrance mixture can be determined by multiplying the ClogP value of each fragrance by its volume ratio in the fragrance mixture and summing those.

Examples of the fragrance compound that can be used for component (B) include a compound having an oil-water interfacial tension of, for example, preferably 7 mN/m or more, more preferably 10 mN/m or more, further preferably 13 mN/m or more at 25°C from the viewpoint of supporting/retention of component (B2) on component (A). The oil-water interfacial tension can be measured, for example, using the contact angle meter "DropMaster DM-501" (trade name, manufactured by Kyowa Interface Science Co., Ltd).

Examples of the fragrance compound that can be used for component (B) include, for example, the following fragrance compounds. Here, the numerals in the parentheses are ClogP values.

Examples include one or more fragrance compounds selected from amyl cinnamic aldehyde (4.3), 2-methylundecanal (4.7), ethyl-3-methyl-3-phenyloxirane-2-carboxylate (3.0), allyl amyl glycolate (2.3), allyl caproate (3.2), allyl cyclohexyl propionate (4.5), allyl heptanoate (3.2), ambrettolide (5.4), Ambroxan® (4.8), amyl salicylate (4.6), isoamyl salicylate (4.5), benzyl benzoate (4.0), benzyl salicylate (4.3), benzyl acetate (2.0), bourgeonal (3.9), o-t-butylcyclohexyl acetate (4.4), p-t-butylcyclohexyl acetate (4.4), Cashmeran® (4.5), cedryl methyl ether (5.0), 1,4-cineole (3.1), 1,8-cineole (3.1), citronellol (3.6), citronellyl acetate (4.6), citronellyl nitrile (3.6), cyclamen aldehyde (3.9), cyclohexyl salicylate (4.9), damascenone (4.2), α-damascone (4.3), β-damascone (4.4), δ-damascone (4.2), decanal (3.8), dihydro myrcenol (3.5), dimethyl tetrahydrobenzaldehyde (2.9), diphenyl oxide (4.1), (1-cyclohexyl-2-methylpropan-2-yl) butanoate (4.4), ethylene brassylate (4.7), ethylene dodecanedioate (4.2), ethyl-2-methylbutyrate (2.3), ethyl vanillin (1.6), eugenol (2.7), Fruitate® (3.6), geraniol (3.5), geranyl acetate (4.5), geranyl nitrile (3.9), hexyl cinnamic aldehyde (4.8), hexyl acetate (4.8), hexyl salicylate (5.1), cis-3-hexenyl salicylate (4.8), Iso E Super (5.2), α-ionone (3.9), β-ionone (4.4), propan-2-yl-2-methylbutanoate (2.7), Javanol® (4.7), Lilial® (4.4), limonene (4.9), linalool (3.3), linalyl acetate (4.4), Lyral® (3.3), manzanate (2.8), methyl dihydrojasmonate (3.0), methyl anthranilate (2.3), methyl β-naphthyl ketone (2.9), γ-methylionone (4.8), methyl salicylate (2.6), 11-oxa-16 hexadecanolide (4.9), nectaryl (5.1), nerol (3.7), Nerolin Yara Yara (3.3), γ-nonalactone (2.1), nonanal (3.3), octanal (2.8), phenylhexanol (3.5), propan-2-yl-2-methylbutanoate (2.7), Sandalmysore core® (4.7), terpineol (3.3), terpinyl acetate (4.3), tetrahydrolinalool (3.6), tricyclodecenyl acetate (2.9), tricyclodecenyl propionate (3.3), γ-undecalactone (3.1), florosa (2), isoamyl acetate (2.3), stearyl acetate (2.5), tripal (2.9), and Dynascone® (4.5).

Examples of the fragrance precursor that can be used for component (B) include, for example, a compound that releases a fragrance component when reacting with water, a compound that releases a fragrance component when reacting with light, and others. Examples of the compound that releases a fragrance component when reacting with water include, for example, a silicic acid ester compound having an alkoxy component derived from a fragrance alcohol, a fatty acid ester compound having an alkoxy component derived from a fragrance alcohol, an acetal compound or a hemiacetal compound obtained by reacting a carbonyl component derived from a fragrance aldehyde or a fragrance ketone with an alcohol compound, a Schiff base compound obtained by reacting a carbonyl component derived from a fragrance aldehyde or a fragrance ketone with a primary amine compound, or a hemiaminal compound or a hydrazone compound obtained by reacting a carbonyl component derived from a fragrance aldehyde or a fragrance ketone with a hydrazine compound. Examples of the compound that releases a fragrance component when reacting with light include, for example, a 2-nitrobenzyl ether compound having an alkoxy component derived from a fragrance alcohol, an α-ketoester compound having a carbonyl component derived from a fragrance aldehyde or a fragrance ketone, a coumaric acid ester compound having an alkoxy component derived from a fragrance alcohol, or the like. These fragrance precursors may be used as a polymer such as, for example, a reaction product of some of the carboxyl groups of polyacrylic acid with a fragrance alcohol, or the like.

Component (B1) is not particularly limited, provided that it is microcapsules encapsulating a fragrance in a shell (sometimes also referred to as a casing) [hereinafter also referred to as fragrance-encapsulating microcapsules, fragrance microcapsules, or microencapsulated fragrances], and the encapsulated fragrance may be one or more, or a fragrance composition including two or more, selected from the fragrance compounds listed above. Further, the capsules of component (B1) adsorb onto a textile product, and disintegrate and release a scent when a stimulus is applied to the textile product by rubbing or the like after drying. Accordingly, the present invention formulated with component (B1) can improve the scent longevity of a textile product.

A preparation method of the fragrance microcapsules is not particularly limited, and a publicly-known microencapsulation method can be adopted. Specific examples include a chemical production method (an interfacial polymerization method, an in-situ polymerization method, or an orifice method), a physicochemical method (a coacervation method), a mechanical/physical method (an air suspension coating method, a spray drying method, or a high-speed air impact method), and others. Examples of the outer casing of the fragrance microcapsules include, for example, in addition to various types of polymeric compounds such as polyurethane, polyamide, melamine resin, urea resin, alginates, gelatin, gum arabic, starch, and others, an inorganic compound such as silica or the like.

As the production method of the fragrance microcapsules, more specifically, a method described in "Making and Using Microcapsules" (Masumi KOISHI et al., Kogyo Chosakai Publishing Co., Ltd., published in 2005), JP-A 2008-63575, JP-A 2006-249326, JP-A 2006-518790, JP-A H11-216354, JP-A H5-222672, or the like can be adopted. A preferable production method of the fragrance microcapsules is, for example, a method including dispersing an emulsifier such as an ethylene-maleic anhydride copolymer or the like and a fragrance and an optional diluent or solvent in water to obtain an emulsion, followed by adding a wall material such as a melamine-formaldehyde resin or the like to this emulsion and stirring them to obtain a slurry of the fragrance microcapsules. Further, another example is a method including premixing a monomer to be a resin that forms a wall material and an emulsifier such as an isobutylene-maleic anhydride copolymer, an acrylic acid-acrylamide copolymer, or the like in water to prepare a mixture of wall material/emulsifier, followed by emulsifying this mixture of wall material/emulsifier and a fragrance and an optional diluent or solvent, and adding formaldehyde to this emulsion and stirring them to obtain a slurry of the fragrance microcapsules, or the like.

A content of the fragrance compound in 100 mass% of the slurry containing the fragrance microcapsules obtained by the above production methods of the fragrance microcapsules may be, for example, preferably 15 mass% or more, more preferably 18 mass% or more, further preferably 20 mass% or more, and preferably 60 mass% or less, more preferably 50 mass% or less, further preferably 40 mass% or less. These contents may be based on formulation amounts when the fragrance-encapsulating microcapsules are prepared.

A content of the fragrance-encapsulating microcapsules in 100 mass% of a slurry containing component (B1) may be, for example, preferably 5.0 mass% or more, more preferably 10.0 mass% or more, further preferably 15 mass% or more, furthermore preferably 20 mass% or more from the viewpoint of stability of component (B1), and preferably 70 mass% or less, more preferably 60 mass% or less, further preferably 50 mass% or less from the viewpoint of improved strength of the fragrance delivery particle of the present invention. These contents may be based on formulation amounts when the fragrance-encapsulating microcapsules are prepared.

Further, a moisture content in 100 mass% of the slurry containing component (B1) may be, for example, preferably 30 mass% or more, more preferably 40 mass% or more, and preferably 85 mass% or less, more preferably 80 mass% or less, further preferably 60 mass% or less. Further, for example, the moisture content of the fragrance delivery particle of the present invention according to the Karl Fischer gas-phase method (JIS K 0113) can also be adjusted by the amount of the fragrance microcapsule slurry containing component (B1).

Further, it is also possible to use capsules encapsulating a fragrance in a silica shell formed through sol-gel reaction using an alkoxysilane as a shell precursor, as described in JP-A 2023-8936. Further, it is also possible to use capsules encapsulating a fragrance in a shell obtained from a water-soluble monomer and a cross-linkable monomer having two or more (meta)acryloyl groups, as described in JP-A 2016-534159.

Component (B1) may have an average particle size of, for example, preferably 0.1 $\mu$m or more, more preferably 1 $\mu$m or more, and preferably 50 $\mu$m or less, more preferably 40 $\mu$m or less from the viewpoint of scent intensity of a treated textile product, further scent intensity of a dried textile product when a stimulus is applied thereto by rubbing or the like. The average particle size (median diameter) of component (B1) can be measured, for example, using the laser diffraction/-scattering particle size distribution analyzer "LA-950" (manufactured by HORIBA, Ltd.)

Component (B2) is, for example, a non-microencapsulated fragrance (also referred to as external fragrance), and may be one or more, or a fragrance composition including two or more, selected from the fragrance compounds listed above. Further, it may be the same as the fragrance compound encapsulated in the fragrance-encapsulating microcapsules of component (B1).

A content of component (B1) in 100 mass% of the fragrance delivery particle of the present invention may be, for example, preferably 0.05 mass% or more, more preferably 0.1 mass% or more, further preferably 0.2 mass% or more, furthermore preferably 0.3 mass% or more, furthermore preferably 0.4 mass% or more, and preferably 6.5 mass% or less, more preferably 6.0 mass% or less, further preferably 5.5 mass% or less, furthermore preferably 5.0 mass% or less, furthermore preferably 4.5 mass% or less. The content of the encapsulated fragrance compound (which may be the formulation amount of the fragrance compound when component (B1) is prepared) as the active ingredient content may be considered as the content of component (B1). For example, it may be based on the formulation amount of the slurry containing component (B1) when the fragrance delivery particle of the present invention is produced.

A content of component (B2) in 100 mass% of the fragrance delivery particle of the present invention may be, for example, preferably 1.0 mass% or more, more preferably 2.0 mass% or more, further preferably 3.0 mass% or more, furthermore preferably 5.0 mass% or more, and preferably 10.0 mass% or less, more preferably 9.0 mass% or less. These contents may be based on formulation amounts when the fragrance delivery particle of the present invention is produced.

A mass ratio of a content of component (B1) to a content of component (B2) [(B1)/(B2)] may be, for example, preferably 0.005 or more, more preferably 0.01 or more, and further preferably 0.1 or more from the viewpoint of better scent quality, and preferably 5.0 or less, more preferably 3.0 or less, further preferably 2.5 or less, and furthermore preferably 2.0 or less, furthermore preferably 0.7 or less, furthermore preferably 0.6 or less from the viewpoint of better scent quality. The content of the encapsulated fragrance compound (which may be the formulation amount of the fragrance compound when component (B1) is prepared) as the active ingredient content may be considered as the content of component (B1). For example, it may be based on the formulation amount of the slurry containing component (B1) when the fragrance delivery particle of the present invention is produced. Further, the content of component (B2) may be based on a formulation amount when the fragrance delivery particle of the present invention is produced.

Component (B) may contain an organic solvent. A content of the organic solvent in 100 mass% of component (B) may be, for example, preferably 0.5 mass% or more, more preferably 1 mass% or more from the viewpoint of promoting supporting/retention of component (B2) on the inside of the pores of component (A) and the viewpoint of stability (suppression of volatilization or suppression of seeping of the fragrance supported/retained on component (A) (component (B2)) or the like during storage of the particle), and preferably 30 mass% or less, more preferably 25 mass% or less from the viewpoint of scent release intensity. The organic solvent in the present invention may be one or more organic compounds which are liquid at 20°C selected from, for example, alcohols with 1 or more and 10 or less carbons, glycols, esters with 6 or more and 20 or less carbons, and paraffins, excluding the fragrance compound. Specifically, examples of the alcohols include methanol, ethanol, and glycerin, examples of the glycols include ethylene glycol, diethylene glycol monoethyl ether, propylene glycol, dipropylene glycol, dipropylene glycol monoethyl ether, and 3-methoxy-3-methylbutanol, examples of the esters include diethyl phthalate, isopropyl myristate, benzyl myristate, triethyl citrate, diisobutyl adipate, and hydrogenated methyl abietate, and examples of the paraffins include liquid paraffin and isoparaffin.

A mass ratio of a content of component (B1) to a content of component (A) in the fragrance delivery particle of the present invention [(B1)/(A)] may be, for example, preferably 0.0001 or more, more preferably 0.0003 or more, further preferably 0.0005 or more from the viewpoint of the release of a scent upon friction, and preferably 0.20 or less, more preferably 0.15 or less, further preferably 0.10 or less from the viewpoint of better scent quality. Here, the term "release of a scent upon friction" means the release of a scent after friction on dry cloth. The content of the encapsulated fragrance compound (which may be the formulation amount of the fragrance compound when component (B1) is prepared) as the active ingredient content may be considered as the content of component (B1). For example, it may be based on the formulation amount of the slurry containing component (B1) when the fragrance delivery particle of the present invention is produced. Further, the content of component (B2) may be based on a formulation amount when the fragrance delivery particle of the present invention is produced.

A mass ratio of a content of component (B2) to a content of component (A) in the fragrance delivery particle of the present invention [(B2)/(A)] may be, for example, preferably 0.01 or more, more preferably 0.015 or more, further preferably 0.03 or more, furthermore preferably 0.05 or more from the viewpoint of more increased strength of the fragrance delivery particle and the viewpoint of scent intensity immediately after spin-drying, and preferably 0.20 or less, more preferably 0.15 or less, further preferably 0.12 or less, furthermore preferably 0.10 or less from the viewpoint of better scent quality. The above content may be based on a formulation amount when the fragrance delivery particle of the present invention is produced.

Further, in the production of the fragrance delivery particle of the present invention, the fragrance delivery particle of the present invention may be formulated with the slurry containing component (B1) in an amount of, for example, preferably 0.3 mass% or more, more preferably 0.5 mass% or more, further preferably 1.0 mass% or more, and preferably 5.0 mass% or less, more preferably 4.0 mass% or less on an as-is basis.

<Composition and others>

A moisture content of the fragrance delivery particle of the present invention according to the Karl Fischer gas-phase method (JIS K 0113) [hereinafter KF moisture content] is 1 mass% or more, and may be, for example, preferably 3 mass% or more, more preferably 5 mass% or more, further preferably 8 mass% or more, furthermore preferably 10 mass% or more, furthermore preferably 20 mass% or more from the viewpoint of strength of the obtained fragrance delivery particle, and 35 mass% or less, and preferably 32 mass% or less from the viewpoint of better scent quality. Note that a measurement method of the moisture content of the fragrance delivery particle of the present invention according to the Karl Fischer gas-phase method (JIS K 0113) can be measured by the method described in the Examples.

The mechanism of action of the present invention is not clear, but the present inventors infer it as follows. The present inventors found out a phenomenon in which the fragrance-encapsulating microcapsules of component (B1) break when component (B1) and component (B2) are stored in contact. Therefore, when a component obtained by mixing component (B1) and component (B2) according to a usual method is supported on the water-soluble solid of component (A), the capsules disintegrate and do not adhere to clothing after washing/rinsing, failing to obtain the effects of the capsules. Component (B2) supported/retained even on the inside of the pores of component (A) is present inside component (A). On the other hand, component (B1) is less likely to enter the pores of component (A). Further, premixing component (D) and component (B1) makes it possible to support/retain component (B1) near the surface of component (A) and improve stability of component (B1). Further, when the KF moisture content of the fragrance delivery particle is low, strength of the fragrance delivery particle is reduced and storage stability is impaired. On the other hand, when the KF moisture content is high, the supported/retained fragrance of component (B2) seeps onto the surface of component (A), disintegrating the capsules (the shape of component (B1)). It is considered that adjusting to the specific moisture content of the present invention optimizes strength of the delivery particle, strength of the capsules, and adsorption efficiency onto a textile product.

While the fragrance delivery particle of the present invention is not particularly limited, it may be preferably spherical, granular, or powdery, and is preferably spherical from the viewpoints of appearance and usability.

The fragrance delivery particle of the present invention may have an average particle size of, for example, preferably 1.0 mm or more, more preferably 1.5 mm or more, further preferably 2.0 mm or more, and preferably 20 mm or less, more preferably 10 mm or less, further preferably 5 mm or less from the viewpoints of solubility and handleability. The average particle size can be measured, for example, by calculating the sphere-equivalent diameters of 250 particles using the image analysis software Image J.

The fragrance delivery particle of the present invention may have an average particle size of, for example, preferably 1.0 mm or more, more preferably 1.5 mm or more, further preferably 2.0 mm or more, and preferably 20 mm or less, more preferably 10 mm or less, further preferably 5 mm or less from the viewpoint of being more likely to obtain the effects of the present invention due to a difference in the specific requirement of the present invention. The average particle size can be measured, for example, by calculating the sphere-equivalent diameters of 250 particles using the image analysis software Image J.

The fragrance delivery particle of the present invention may have, for example, preferably a bulk density of 400 g/L or more, more preferably a bulk density of 500 g/L or more from the viewpoint of volume when in use, and preferably a bulk density of 1000 g/L or less, more preferably a bulk density of 800 g/L or less from the viewpoints of usability when in use and solubility. The bulk density can be measured, for example, using an apparent density tester in accordance with JIS K 7365.

As an embodiment of the fragrance delivery particle of the present invention, component (B) is preferably supported/retained on the water-soluble solid, preferably the water-soluble inorganic salt, of component (A).

<Component (C)>

The fragrance delivery particle of the present invention, for example, can further contain (C) one or more selected from a water-soluble cationic polymeric compound and a cationic surfactant [hereinafter component (C)] from the viewpoint of promoting adsorption of component (B1) onto a textile product.

Specific examples of the water-soluble cationic polymeric compound include, for example, polydiallyldimethylammonium chloride and a copolymer thereof, such as poly(diallyldimethylammonium chloride), and poly(acrylic acid-co-diallyldimethylammonium chloride), poly(acrylamide-co-diallyldimethylammonium chloride), poly(acrylamide-co-acrylic acid-co-diallyldimethylammonium chloride), or the like, poly(2-(methacryloyloxy)ethyl trimethylammonium chloride), polyethyleneimine, polyallylamine, cationized cellulose, cationized guar gum, cationized tara gum, cationized fenugreek gum, cationized locust bean gum, and others. Among these, the water-soluble cationic polymeric compound may be preferably one or more selected from polydiallyldimethylammonium chloride and a copolymer thereof, such as poly(diallyldimethylammonium chloride), and poly(acrylic acid-co-diallyldimethylammonium chloride) and poly(acrylamide-co-acrylic acid-co-diallyldimethylammonium chloride), more preferably one or more selected from poly(acrylamide-co-diallyldimethylammonium chloride) and poly(diallyldimethylammonium chloride).

Examples of the cationic surfactant include, for example, an alkylamine salt, an alkyl quaternary ammonium salt, or the like.

The alkylamine salt is, for example, preferably a salt of a secondary amine or a tertiary amine, and may be more preferably a salt of a tertiary amine. The alkylamine salt is preferably a compound, for example, having at least one long-chain alkyl group, and optionally having a group selected from preferably at least one long-chain alkyl group, short-chain alkyl group, and benzyl group. The long-chain alkyl group has, for example, preferably 10 or more, more preferably 12 or more, further preferably 14 or more, and preferably 22 or less, more preferably 20 or less, further preferably 18 or less carbons. The short-chain alkyl group has, for example, preferably 1 or more and preferably 4 or less, more preferably 1 or 2 carbons, and is further preferably a group with one carbon, i.e., a methyl group. Examples of the alkylamine salt include an alkyl amine salt such as a long-chain monoalkyl monomethyl secondary amine salt, a long-chain monoalkyl dimethyl tertiary amine salt, or the like, in which, for example, the carbon number of the long-chain alkyl group falls within the above range. Examples of the long-chain monoalkyl dimethyl tertiary amine salt include, for example, an alkyl amine acetate such as lauryl dimethyl amine acetate, stearyl dimethyl amine acetate, or the like.

The alkyl quaternary ammonium salt is preferably a compound, for example, having at least one long-chain alkyl group, and optionally having a group selected from preferably at least one long-chain alkyl group, short-chain alkyl group, and benzyl group. The long-chain alkyl group has, for example, preferably 10 or more, more preferably 12 or more, further preferably 14 or more, and preferably 22 or less, more preferably 20 or less, further preferably 18 or less carbons. The short-chain alkyl group has, for example, preferably 1 or more and preferably 4 or less, more preferably 1 or 2 carbons, and is further preferably a group with one carbon, i.e., a methyl group. Examples of the alkyl quaternary ammonium salt include a long-chain alkyl tri-short-chain alkyl quaternary ammonium salt, a di-long-chain alkyl di-short-chain alkyl quaternary ammonium salt, a long-chain alkyl benzyl di-short-chain alkyl quaternary ammonium salt, or the like, in which, for example, the carbon numbers of the long-chain alkyl group and the short-chain alkyl group fall within the above respective ranges. Examples of the long-chain alkyl tri-short-chain alkyl quaternary ammonium salt include, for example, an alkyl trimethyl ammonium chloride such as lauryl trimethyl ammonium chloride, cetyl trimethyl ammonium chloride, stearyl trimethyl ammonium chloride, or the like, an alkyl trimethyl ammonium bromide such as lauryl trimethyl ammonium bromide, cetyl trimethyl ammonium bromide, stearyl trimethyl ammonium bromide, or the like, and others. Examples of the di-long-chain alkyl di-short-chain alkyl quaternary ammonium salt include, for example, a dialkyl dimethyl ammonium chloride such as distearyl dimethyl ammonium chloride or the like, a dialkyl dimethyl ammonium bromide such as distearyl dimethyl ammonium bromide or the like, and others. Examples of the long-chain alkyl benzyl di-short-chain alkyl quaternary ammonium salt include, for example, an alkyl benzyl dimethyl ammonium chloride, an alkyl benzyl dimethyl ammonium bromide, and others.

Among these, the cationic surfactant is, for example, preferably an alkyl quaternary ammonium salt, more preferably an alkyl trimethyl ammonium salt having an alkyl group with 10 or more and 22 or less carbons, further preferably an alkyl trimethyl ammonium chloride having an alkyl group with 10 or more and 22 or less carbons, and may be furthermore preferably one or more selected from lauryl trimethyl ammonium chloride, stearyl trimethyl ammonium chloride, and cetyl trimethyl ammonium chloride, furthermore preferably cetyl trimethyl ammonium chloride.

When the fragrance delivery particle of the present invention contains the water-soluble cationic polymeric compound, a content of the water-soluble cationic polymeric compound in 100 mass% of the fragrance delivery particle of the present invention may be, for example, preferably 0.01 mass% or more, more preferably 0.03 mass% or more, further preferably 0.05 mass% or more, and preferably 2.0 mass% or less, more preferably 1.0 mass% or less from the viewpoint of promoting adsorption of component (B1) onto a textile product. These contents may be based on formulation amounts when the fragrance delivery particle of the present invention is produced. Further, the above content excludes the cationic surfactant in the present invention.

When the fragrance delivery particle of the present invention contains the cationic surfactant, a content of the cationic surfactant in the present invention in 100 mass% of the fragrance delivery particle of the present invention may be, for example, preferably 0.01 mass% or more, more preferably 0.05 mass% or more, and preferably 2.0 mass% or less, more preferably 1.0 mass% or less from the viewpoint of promoting adsorption of component (B1) onto a textile product. The above content may be based on a formulation amount when the fragrance delivery particle of the present invention is produced. The mass of the cationic surfactant is expressed using a value in terms of a chlorine salt.

<Component (D)>

The fragrance delivery particle of the present invention, for example, can further contain (D) a water-soluble nonionic polymer [hereinafter component (D)] from the viewpoint of strength, solubility, or stability of the obtained fragrance delivery particle (suppression of volatilization or suppression of seeping of the fragrance supported/retained on component (A) (component (B2)) or the like during storage of the particle). Component (D) may be, for example, preferably polyethylene glycol (PEG), polypropylene glycol, a polyoxyethylene alkyl ether, or a polyoxyethylene phenol ether, more preferably polyethylene glycol or polypropylene glycol. Further, a number average molecular weight of component (D) may be, for example, preferably 2000 or more, more preferably 3000 or more, further preferably 4000 or more, and preferably 20000 or less, more preferably 15000 or less, further preferably 10000 or less according to a GPC method using polystyrene as a reference from the viewpoint of strength, solubility, or stability of the obtained fragrance delivery particle (suppression of volatilization or suppression of seeping of the fragrance supported/retained on component (A) (component (B2)) or the like during storage of the particle). When the molecular weight of polyethylene glycol is measured, water/ethanol is used as a solvent.

When the fragrance delivery particle of the present invention contains component (D), a content of component (D) in 100 mass% of the fragrance delivery particle may be, for example, preferably 0.5 mass% or more, more preferably 1 mass% or more from the viewpoint of strength, solubility, or stability of the obtained fragrance delivery particle (suppression of volatilization or suppression of seeping of the fragrance supported/retained on component (A) (component (B2)) or the like during storage of the particle), and preferably 30 mass% or less, more preferably 25 mass% or less, further preferably 20 mass% or less from the viewpoints of solubility of the fragrance delivery particle of the present invention and better scent quality. The above content may be based on a formulation amount when the fragrance delivery particle of the present invention is produced.

When the fragrance delivery particle of the present invention contains component (D), a mass ratio of a content of component (A) to a content of component (D) [(A)/(D)] may be, for example, preferably 0.1 or more, more preferably 0.2 or more, further preferably 0.3 or more, furthermore preferably 0.5 or more, furthermore preferably 1.0 or more, furthermore preferably 5.0 or more, furthermore preferably 7.0 or more from the viewpoint of solubility, and preferably 100 or less, more preferably 95 or less, further preferably 50 or less, furthermore preferably 30 or less, furthermore preferably 25 or less, furthermore preferably 20 or less from the viewpoint of product stability (suppression of volatilization or suppression of seeping of the fragrance supported/retained on component (A) (component (B2)) or the like during storage of the particle). The above content may be based on a formulation amount when the fragrance delivery particle of the present invention is produced.

<Component (E)>

The fragrance delivery particle of the present invention, for example, can further contain (E) an oxidation stabilizer [hereinafter component (E)].

As the oxidation stabilizer, for example, antioxidants such as butylated hydroxytoluene (BHT), butylated hydroxyanisole (BHA), distyrenated cresol, sodium sulfite, and sodium bisulfite, or the like can be used.

When the fragrance delivery particle of the present invention contains component (E), a content of component (E) in 100 mass% of the fragrance delivery particle of the present invention may be, for example, preferably 0.01 mass% or more, more preferably 0.02 mass% or more, and preferably 0.50 mass% or less, more preferably 0.30 mass% or less. The above content may be based on a formulation amount when the fragrance delivery particle of the present invention is produced.

The fragrance delivery particle of the present invention, for example, can further contain an organic solvent in addition to optionally containing the above component (C), (D), or (E) from the viewpoint of promoting supporting/retention of component (B2) on the inside of the pores of component (A) and the viewpoint of stability (suppression of volatilization or suppression of seeping of the fragrance supported/retained on component (A) (component (B2)) or the like during storage of the particle). When the fragrance delivery particle of the present invention contains the organic solvent, it may be the same as the organic solvent optionally contained in component (B), and a content thereof in 100 mass% of the fragrance delivery particle of the present invention may be, for example, preferably 0.02 mass% or more, more preferably 0.05 mass% or more, and preferably 3.0 mass% or less, more preferably 2.5 mass% or less, further preferably 1.5 mass% or less. The above range may include the organic solvent optionally contained in component (B).

[Method for producing fragrance delivery particle]

The fragrance delivery particle of the present invention can be obtained, for example, by mixing component (A) and component (B). In other words, the present invention provides a method for producing a fragrance delivery particle, including mixing component (A), component (B1), and component (B2). Specific examples, preferable examples, or the like of component (A) and component (B) may be the same as in the fragrance delivery particle of the present invention described above. From the viewpoint of adjusting to the moisture content of the fragrance delivery particle of the present invention, as component (A), for example, a water-soluble solid dried in advance to adjust a moisture content according to an infrared moisture meter to 0.1 mass% or more and 20 mass% or less can be used, and a water-soluble solid with a moisture content according to an infrared moisture meter of more than 20 mass% can be used after being dried to adjust the moisture content according to an infrared moisture meter to be in a range of 0.1 mass% or more and 20 mass% or less.

Component (A) can be dried, for example, using electric dryers (shelf drying), fluidized bed drying, vacuum drying, microwave drying, or the like to adjust the amount of moisture contained in the water-soluble solid. From the viewpoint of suppressing disintegration of the water-soluble solid during drying, for example, a drying method that minimizes the application of strong shear forces is preferable. Further, from the viewpoint of facilities, for example, shelf drying, fluidized bed drying, or vacuum drying is preferable.

A drying process is not particularly limited, whether a batch method or a continuous method. For example, examples of the batch method include, for example, a drying method using an electric shelf dryer or hot air dryer, a drying method using a batch fluidized bed, or the like, and examples of the continuous method include, for example, a fluidized bed, a vibrating fluidized bed, a rotary dryer, a steam tube dryer, or the like.

Drying conditions are not particularly limited, provided that the moisture content of the water-soluble solid according to an infrared moisture meter can be adjusted to be in a range of, for example, preferably 0.1 mass% or more and preferably 20 mass% or less. For example, a combination of the following drying temperature and the following drying time enables the adjustment.

The drying temperature can be appropriately determined considering a drying rate, but may be, for example, preferably 60°C or more, more preferably 80°C or more, further preferably 100°C or more. Further, an upper limit thereof may be preferably 200°C or less, more preferably 180°C or less, further preferably 150°C or less, furthermore preferably 130°C or less from the viewpoint of thermal load or adhesion of the water-soluble solid.

The drying time varies depending on moisture in the water-soluble solid used for the production, or the amount thereof, but may be, for example, preferably 5 minutes or more, more preferably 15 minutes or more, and preferably 1 hour or less, more preferably 40 minutes or less in the case of batch operation using a fluidized bed dryer. In the case of electric drying, it may be, for example, preferably 10 minutes or more, more preferably 30 minutes or more, and preferably 4 hours or less, more preferably 2 hours or less.

Further, the water-soluble solid may be produced by drying, for example, after compression molding, or compression molding into granule, flake, or bead form, in advance. It can be produced by applying a publicly-known method as a molding method. For example, it can be produced by applying a compression molding method, an extrusion granulation method, a tumbling granulation method, an agitation granulation method, or a compaction granulation method. Among these, it is preferably molded, for example, by a compression molding method.

When the water-soluble solid is compression molded, a used producing machine is not limited, provided that it can form, for example, a briquette or tablet. A well-known briquetting machine or tablet press, or the like can be used. A briquetting machine is a device that continuously compression molds granulated material by feeding it between two intermeshing rolls rotating at the same rate and having pockets, as a mold for desired compressed material, cut into their outer peripheries. As the well-known briquetting machine, for example, BRIQUETTING MACHINE [manufactured by SINTOKOGIO, LTD.] or the like can be used. A tablet press is a device that molds granulated material by filling it into a die and compressing it between a lower punch and an upper punch. The tablet press includes a single-punch tablet press in which a single pair of upper and lower punches moves vertically within one die to perform compression, and a rotary tablet press in which dies are embedded at equal intervals around the outer periphery of a horizontally rotating turntable, and the sequential operation of filling, compression, and ejection is continuously performed while the turntable rotates. As the well-known tablet press, for example, a tablet press manufactured by RIKEN can be used as the single-punch tablet press, and for example, a tablet press manufactured by KIKUSUI Chemical Industries Co., Ltd. can be used as the rotary tablet press.

When the molding is performed using the methods other than compression molding, a well-known extrusion granulation machine such as, for example, Pelleter Double, Dome Gran, Twin Dome Gran, or Disc Pelleter (manufactured by DALTON Corporation), a basket-type granulator (manufactured by KIKUSUI SEISAKUSHO LTD.), or the like, as well as a tumbling granulation machine or the like can be used. Further, after molding, granulation can be performed as necessary. As a machine used for the granulation, a well-known pulverizer (or grinder) can be used, and for example, Marumerizer (manufactured by DALTON Corporation), Fitz Mill (manufactured by DALTON Corporation), Power Mill (manufactured by Powrex Corporation), Comil (manufactured by Quadro), or the like can be used.

As an embodiment of the fragrance delivery particle of the present invention, the fragrance delivery particle can be produced by mixing a mixture obtained by mixing component (A) and component (B2) and component (B1). Further, as another embodiment of the fragrance delivery particle of the present invention, the fragrance delivery particle can be produced by mixing a mixture obtained by mixing component (A) and component (B2) and a mixture obtained by mixing component (B1) and component (D). Premixing component (A) and component (B2) and mixing the mixture obtained by mixing component (B1) and component (D) to the mixture of component (A) and component (B2) in the state where component (B2) is supported/retained inside component (A) enables the mixture of component (B1) and component (D) to be supported/retained on the surface of component (A), making it possible to improve the stability of the fragrance delivery particle in which component (B1) is supported/retained.

Further, as another embodiment of the fragrance delivery particle of the present invention, the fragrance delivery particle can be produced by mixing a mixture obtained by mixing component (A) and component (B1) and component (B2). Further, as another embodiment of the fragrance delivery particle of the present invention, the fragrance delivery particle can be produced by mixing a mixture obtained by mixing component (A) and component (B1) and a mixture obtained by mixing component (B2) and component (D). Mixing the mixture obtained by mixing component (B2) and component (D) to the mixture of component (A) and component (B1) enables the mixture of component (B2) and component (D) to be supported/retained on the surface of component (A), making it possible to improve the stability of the fragrance delivery particle in which component (B2) is supported/retained. As the mixture obtained by mixing component (A) and component (B1), a mixture obtained by mixing a slurry containing component (B1) and component (A) can also be used.

As another embodiment, the fragrance delivery particle of the present invention can also be produced by dividing component (A) and mixing it in stages. Specific examples include a production method including the following step (i) to step (iii);

step (i) a step of mixing part of component (A) and component (B2) to obtain a mixture;
step (ii) a step of mixing the mixture obtained in step (i) and the balance of component (A); and
step (iii) a step of mixing a mixture obtained in step (ii) and component (B1) to produce the fragrance delivery particle.

When component (A) is thus mixed in stages, a fragrance-containing particle containing component (A) and component (B1) (not containing component (B2)) may be obtained at any ratio in addition to the fragrance delivery particle of the present invention containing component (A), component (B1), and component (B2). The fragrance delivery particle of the present invention may be used together with the fragrance-containing particle containing component (A) and component (B1) depending on the situation.

When the fragrance delivery particle of the present invention is produced by mixing component (A) in stages, a content ratio of the fragrance delivery particle of the present invention (in other words, the fragrance delivery particle containing component (A), component (B1), and component (B2)) in 100 mass% of all obtained particles may be, for example, preferably 25 mass% or more, more preferably 35 mass% or more, and preferably 75 mass% or less, more preferably 65 mass% or less from the viewpoint of storage stability, and the fragrance-containing particle containing component (A) and component (B1) may be a component for the balance.

When the fragrance delivery particle of the present invention is produced by mixing component (A) in stages, the mixed solution added in step (iii) is considered to be uniformly distributed to the mixture of part of component (A), component (B2), and optional component (E) in step (i), and the balance of component (A) in step (ii). Therefore, the content ratio of the fragrance delivery particle in the obtained mixed particles can be determined by calculating a ratio of a formulation amount in step (i) (on an active-ingredient basis) in a total formulation amount of the formulation amount in step (i) (on an active-ingredient basis) and a formulation amount in step (ii) (on an active-ingredient basis) and multiplying the ratio by a formulation amount of the mixed solution added in step (iii) (on an active-ingredient basis).

When the fragrance delivery particle of the present invention is produced by mixing component (A) in stages, a mass ratio of a formulation amount of mixed component (B2) to part of a formulation amount of component (A) in step (i) [component (B2)/(1) of component (A)] may be, for example, preferably 0.033 or more, more preferably 0.05 or more, and preferably 0.2 or less, more preferably 0.15 or less.

When the fragrance delivery particle of the present invention is produced by mixing component (A) in stages, a mass ratio of a formulation amount of component (B1) mixed in step (iii) to the balance of the formulation amount of component (A) mixed in step (ii) [[component (B1) in step (iii)]/(2) of component (A) in step (ii)] may be, for example, preferably 0.0033 or more, more preferably 0.0066 or more, and preferably 0.030 or less, more preferably 0.025 or less.

When the fragrance delivery particle of the present invention is produced by mixing component (A) in stages, a mass ratio of part of the formulation amount of component (A) mixed in step (i) to the balance of the formulation amount of component (A) mixed in step (ii) [step (i)/step (ii)] is, for example, preferably 0.1 or more, more preferably 0.2 or more, and preferably 10 or less, more preferably 5 or less.

As another embodiment of the fragrance delivery particle of the present invention, the fragrance delivery particle is produced by a method including dividing component (A) and mixing it in stages, and specific examples include a production method including the following step (i') to step (iii');

step (i') a step of mixing part of component (A) and component (B1) to obtain a mixture;
step (ii') a step of mixing the mixture obtained in step (i') and the balance of component (A); and
step (iii') a step of mixing a mixture obtained in step (ii') and component (B2) to produce the fragrance delivery particle.

When component (A) is thus mixed in stages, a fragrance-containing particle containing component (A) and component (B2) (not containing component (B1)) may be obtained at any ratio in addition to the fragrance delivery particle of the present invention containing component (A), component (B1), and component (B2). The fragrance delivery particle of the present invention may be used together with the fragrance-containing particle containing component (A) and component (B2) depending on the situation.

Note that, when mixed particles containing the fragrance delivery particle of the present invention, in other words, mixed particles containing the fragrance delivery particle of the present invention and the fragrance-containing particle are used, a mass ratio of a content of the fragrance delivery particle of the present invention to a content of the fragrance-containing particle [fragrance delivery particle/fragrance-containing particle] may be, for example, preferably 10/100 or more, more preferably 20/80 or more, further preferably 30/70 or more, and preferably 100/10 or less, more preferably 80/20 or less, further preferably 70/30 or less.

Further, when the mixed particles containing the fragrance delivery particle of the present invention and the fragrance-containing particle are used, a moisture content of the mixed particles according to the Karl Fischer gas-phase method (JIS K 0113) is, for example, 1 mass% or more, and may be, for example, preferably 3 mass% or more, more preferably 5 mass% or more, further preferably 8 mass% or more, furthermore preferably 10 mass% or more, furthermore preferably 20 mass% or more from the viewpoint of strength of the obtained mixed particles, and for example, 35 mass% or less, and preferably 32 mass% or less from the viewpoint of better scent quality.

A preferable range of a mass ratio of part of a formulation amount of component (A) mixed in step (i') to the balance of the formulation amount of component (A) mixed in step (ii') [step (i')/step (ii')] may be the same as that of the above mass ratio [step (i)/step (ii)].

Further, as another embodiment, the fragrance delivery particle of the present invention can be produced by mixing a mixture obtained by mixing component (A), component (B2), and component (E), and further a mixture obtained by mixing component (B1), component (C), and component (D) from the viewpoints of suppression of volatilization of component (B2) and fragrance stability. Further, as another embodiment, the fragrance delivery particle of the present invention can be produced by mixing a mixture obtained by mixing component (A), component (B2), component (C), and component (D), and further a mixture obtained by mixing component (B1) and component (E) from the viewpoint of suppression of leakage of the encapsulated component of component (B1).

Further, as another embodiment, the fragrance delivery particle of the present invention can be produced by mixing a mixture obtained by mixing component (A), component (B2), and component (E), and further a mixture of component (B1), component (C), and component (D) from the viewpoint of suppression of leakage of the encapsulated component of component (B1), the viewpoint of strength of component (A), and the viewpoint of storage stability of component (B1).

A mixing machine is not particularly limited, provided that component (A), component (B), and optional components can be substantially uniformly mixed. It may be a mixing machine with a heating unit, and examples include, for example, a drum-type mixer, a ribbon mixer, a Nauta mixer, or a V-type blender (manufactured by Powrex Corporation), a double cone mixer (manufactured by TOKUJU CORPORATION), a ribbon blender (manufactured by Hosokawa Micron Corporation), a container-rotating granulating machine (manufactured by SUGIYAMA HEAVY INDUSTRIAL CO., LTD.), or the like.

For example, a container-rotating granulating machine is preferably used to prevent strong shear from being applied to disintegrate component (A) when mixing component (A), component (B), and optional components. Preferable container-rotating granulating machines are, for example, a drum-type granulating machine and a pan-type granulating machine. The drum-type granulating machine is not particularly limited, provided that a drum-shaped cylinder rotates to perform a process. A horizontal or slightly inclined drum-type granulating machine can also be used. These devices may be of any type, for example, a batch type or a continuous type. Note that, when the wall friction coefficient between component (A) and the inner wall of the container-rotating granulating machine is low, and a sufficient upward motion force is less likely to be applied to the powder, for example, multiple baffles are preferably installed on the inner wall of the container to assist mixing. The installation of baffles enables upward motion to be imparted to the powder, thereby improving powder mixability and solid-liquid mixability.

Operating conditions for the container-rotating granulating machine are not particularly limited, provided that the water-soluble solid in the granulating machine can be fluidized and agitated as uniformly as possible under the conditions. From the viewpoint of obtaining granules with good disintegration strength or the like, the Froude number defined by the following formula (1) can be, for example, preferably 0.01 or more, more preferably 0.05 or more, further preferably 0.09 or more. From the viewpoint of obtaining uncompacted granules, an upper limit thereof can be preferably 1.0 or less, more preferably 0.4 or less, further preferably 0.2 or less. In the present invention, 9.80665 m/s$^2$ is used as g.

$$\text{Froude number: } Fr = V^2/(R \times g) \qquad (1)$$

V: surface speed [m/s]
R: radius from rotation center to circumference of rotating object [m]
g: gravitational acceleration [m/s$^2$]

Note that, in a drum-type granulating machine or pan-type granulating machine where granulation proceeds due to the rotation of a barrel portion of a main body, for example, values for the barrel portion of the main body are used as V and R. In a horizontal or vertical granulating machine equipped with a main blade or a crushing blade, values for a main shaft are used as V and R. In a pan-type granulating machine equipped with a crushing blade, for example, values for the crushing blade are used as V and R.

A mixing temperature may be, for example, preferably 20°C or more, more preferably 30°C or more from the viewpoint of fluidity or handleability, and preferably 60°C or less, more preferably 50°C or less from the viewpoint of volatilization stability of component (B2).

A number of revolutions of the mixing machine may be, for example, preferably 10 rpm or more, more preferably 20 rpm or more from the viewpoint of mixing uniformity, and preferably 100 rpm or less, more preferably 50 rpm or less from the viewpoint of suppression of disintegration of the water-soluble solid.

A mixing time may be, for example, preferably 1 minute or more, more preferably 3 minutes or more from the viewpoint of mixing uniformity, and preferably 20 minutes or less, more preferably 10 minutes or less from the viewpoint of suppression of disintegration of the water-soluble solid.

When component (A) and component (B) are mixed, for example, component (B) may be supplied by adding it dropwise from piping using a pump or may be supplied using a nozzle. It may be supplied, for example, using a single-fluid nozzle or a multi-fluid nozzle as the nozzle. Component (B) can be dispersed as fine liquid droplets by using the multi-fluid nozzle. A multi-fluid nozzle is a nozzle that mixes/atomizes a liquid and an atomizing gas (air, nitrogen, or the like) distributed through independent channels to the vicinity of a nozzle tip. Examples can include, for example, a two-fluid nozzle, a three-fluid nozzle, a four-fluid nozzle, and others. Further, the type of a mixing portion for the fragrance and the atomizing gas may be, for example, either an internal mixing type where the mixing is performed inside the nozzle tip or an external mixing type where the mixing is performed outside the nozzle tip. Examples of such multi-fluid nozzles include, for example, an internal mixing type two-fluid nozzle manufactured by Spraying Systems Co., manufactured by KYORITSU GOKIN Co., Ltd., or manufactured by H. IKEUCHI & CO., LTD., or the like, an external mixing type two-fluid nozzle manufactured by Spraying Systems Co., manufactured by KYORITSU GOKIN Co., Ltd., or manufactured by ATOMAX Co,. Ltd., or the like, an external mixing type four-fluid nozzle manufactured by fujisaki electric Co., Ltd., and others.

When component (B) is supplied to component (A) using the multi-fluid nozzle, a supply temperature may be, for example, preferably 20°C or more, more preferably 30°C or more from the viewpoint of fluidity or handleability, and preferably 60°C or less, more preferably 50°C or less from the viewpoint of volatilization stability of component (B2).

Further, an addition rate of component (B) may be, for example, preferably 1 part by mass/min or more, more preferably 5 parts by mass/min or more, and preferably 20 parts by mass/min or less, more preferably 15 parts by mass/min or less relative to 100 parts by mass of component (A) from the viewpoint of uniform supporting/retention of component (B) in component (A).

In an embodiment, the fragrance delivery particle of the present invention can be applied in a laundering process of a textile product. In other words, the present invention can provide a method for imparting a scent to a textile product, including adding the fragrance delivery particle in a laundering process of the textile product to treat the textile product.

When the fragrance delivery particle of the present invention is added in the laundering process of the textile product, an addition amount of the fragrance delivery particle of the present invention may be, for example, preferably 5.0 g or more, more preferably 7.0 g or more, and preferably 10.0 g or less, more preferably 8.0 g or less relative to 1 kg of the textile product. The textile product can be treated with the fragrance delivery particle of the present invention alone, or may be treated using a fiber treatment agent composition containing the fragrance delivery particle of the present invention.

When the fragrance delivery particle of the present invention is added in the laundering process of the textile product, the fragrance delivery particle of the present invention can be added to at least one or more of washing water and rinsing water for laundry, or the fragrance delivery particle of the present invention can be added to both washing water and rinsing water for laundry.

Examples of a method when the fragrance delivery particle of the present invention is added in the laundering process of the textile product include putting it in an amount of, for example, preferably 0.001 ppm or more, more preferably 0.01 ppm or more, and preferably 1000 ppm or less, more preferably 100 ppm or less relative to water. It is preferably used in washing water from the viewpoint of convenience when putting it in a washing machine, but can also be put in rinsing water. The washing water and rinsing water for laundry may contain a laundry detergent component for textile products.

The present invention discloses the fragrance delivery particles, the methods for producing a fragrance delivery particle, and the methods for imparting a scent to a textile product below.

<1>

A fragrance delivery particle containing (A) a water-soluble solid [hereinafter component (A)] and (B) a fragrance [hereinafter component (B)], wherein component (B) includes (B1) a microencapsulated fragrance [hereinafter component (B1)] and (B2) a non-microencapsulated fragrance [hereinafter component (B2)], and a moisture content of the fragrance delivery particle according to the Karl Fischer gas-phase method (JIS K 0113) [hereinafter KF moisture content] is 1 mass% or more and 35 mass% or less.

<2>

The fragrance delivery particle according to <1>, wherein a KF moisture content of the fragrance delivery particle is 3 mass% or more, further 5 mass% or more, further 8 mass% or more, further 10 mass% or more, further 20 mass% or more, and 35 mass% or less, further 32 mass% or less.

<3>

The fragrance delivery particle according to <1> or <2>, wherein component (A) is a water-soluble solid with a solubility of 1.0 g or more, further a solubility of 1.0 g or more and 60 g or less in 100 g of water at 20°C.

<4>

The fragrance delivery particle according to any of <1> to <3>, wherein component (A) is a water-soluble solid having pores with an average pore size of 1 nm or more, further 10 nm or more, and 1000 $\mu$m or less, further 100 $\mu$m or less in its surface.

<5>

The fragrance delivery particle according to any of <1> to <4>, wherein component (A) is a water-soluble solid with a bulk density of 450 g/L or more, further 500 g/L or more, and 750 g/L or less, further 650 g/L or less.

<6>

The fragrance delivery particle according to any of <1> to <5>, wherein component (A) is a water-soluble solid with an average particle size of 1.0 mm or more, further 3.0 mm or more, and 20 mm or less, further 15 mm or less, further 10 mm or less, further 5 mm or less.

<7>

The fragrance delivery particle according to any of <1> to <6>, wherein component (A) is a dried product of a water-soluble solid with water of crystallization, further a water-soluble inorganic salt with water of crystallization.

<8>

The fragrance delivery particle according to any of <1> to <7>, wherein component (A) is a water-soluble solid with a moisture content according to an infrared moisture meter of 0.1 mass% or more, further 1 mass% or more, further 1.6 mass% or more, further 2.0 mass% or more, further 5 mass% or more, further 8 mass% or more, and 20 mass% or less, further 18 mass% or less, further 15 mass% or less, further 14 mass% or less.

<9>

The fragrance delivery particle according to any of <1> to <8>, wherein component (B1) is fragrance-encapsulating microcapsules which are microcapsules encapsulating a fragrance compound having a ClogP of 1.0 or more, further 1.5 or more, further 2.0 or more, further 2.3 or more, further 2.5 or more, and 30 or less, further 20 or less, further 10 or less, further 6.0 or less, further 5.5 or less, further 5.0 or less.

<10>

The fragrance delivery particle according to any of <1> to <9>, wherein component (B2) is a non-microencapsulated fragrance having a ClogP of 1.0 or more, further 1.5 or more, further 2.0 or more, further 2.3 or more, further 2.5 or more, and 30 or less, further 20 or less, further 10 or less, further 6.0 or less, further 5.5 or less, further 5.0 or less.

<11>

The fragrance delivery particle according to any of <1> to <10>, wherein component (B1) is fragrance-encapsulating microcapsules which are microcapsules encapsulating a fragrance compound having an oil-water interfacial tension of 7 mN/m or more, further 10 mN/m or more, further 13 mN/m or more.

<12>

The fragrance delivery particle according to any of <1> to <11>, wherein component (B2) is a non-microencapsulated fragrance having an oil-water interfacial tension of 7 mN/m or more, further 10 mN/m or more, further 13 mN/m or more.

<13>

The fragrance delivery particle according to any of <1> to <12>, wherein component (B1) is fragrance-encapsulating microcapsules having an average particle size of 0.1 μm or more, further 0.1 μm or more, further 1 μm or more, and 50 μm or less, further 40 μm or less.

<14>

The fragrance delivery particle according to any of <1> to <13>, wherein a content of component (B1) in 100 mass% of the fragrance delivery particle is 0.05 mass% or more, further 0.05 mass% or more, further 0.1 mass% or more, further 0.2 mass% or more, further 0.3 mass% or more, further 0.4 mass% or more, and 6.5 mass% or less, further 6.0 mass% or less, further 5.5 mass% or less, further 5.0 mass% or less, further 4.5 mass% or less.

<15>

The fragrance delivery particle according to any of <1> to <14>, wherein a content of component (B2) in 100 mass% of the fragrance delivery particle is 1.0 mass% or more, further 2.0 mass% or more, further 3.0 mass% or more, further 5.0 mass% or more, and 10.0 mass% or less, further 9.0 mass% or less.

<16>

The fragrance delivery particle according to any of <1> to <15>, wherein a mass ratio of a content of component (B1) to a content of component (A) [(BI)/(A)] is 0.0001 or more, further 0.0003 or more, further 0.0005 or more, and 0.20 or less, further 0.15 or less, further 0.10 or less.

<17>

The fragrance delivery particle according to any of <1> to <16>, wherein a mass ratio of a content of component (B2) to a content of component (A) [(B2)/(A)] is 0.01 or more, further 0.015 or more, further 0.03 or more, further 0.05 or more, and 0.20 or less, further 0.15 or less, further 0.12 or less, further 0.10 or less.

<18>

The fragrance delivery particle according to any of <1> to <17>, wherein an average particle size of the fragrance delivery particle is 1.0 mm or more, further 1.5 mm or more, further 2.0 mm or more, and 20 mm or less, further 10 mm or less, further 5 mm or less.

<19>

The fragrance delivery particle according to any of <1> to <18>, wherein a bulk density of the fragrance delivery particle is 400 g/L or more, further 500 g/L or more, and 1000 g/L or less, further 800 g/L or less.

<20>

The fragrance delivery particle according to any of <1> to <19>, further containing (C) one or more selected from a water-soluble cationic polymeric compound and a cationic surfactant [hereinafter component (C)].

<21>

The fragrance delivery particle according to any of <1> to <20>, wherein the cationic surfactant as component (C) is an alkyl quaternary ammonium salt, further an alkyl trimethyl ammonium salt having an alkyl group with 10 or more and 22 or less carbons, further an alkyl trimethyl ammonium chloride having an alkyl group with 10 or more and 22 or less carbons, further one or more selected from lauryl trimethyl ammonium chloride, stearyl trimethyl ammonium chloride, and cetyl trimethyl ammonium chloride, further cetyl trimethyl ammonium chloride.

<22>

The fragrance delivery particle according to any of <1> to <21>, wherein a content of the cationic surfactant as component (C) in 100 mass% of the fragrance delivery particle is 0.01 mass% or more, further 0.05 mass% or more, and 2.0 mass% or less, further 1.0 mass% or less.

<23>

The fragrance delivery particle according to any of <1> to <22>, wherein the water-soluble cationic polymeric compound as component (C) is one or more selected from poly(acrylamide-co-diallyldimethylammonium chloride) and poly(diallyldimethylammonium chloride).

<24>

The fragrance delivery particle according to any of <1> to <23>, wherein a content of the water-soluble cationic polymeric compound as component (C) in 100 mass% of the fragrance delivery particle is 0.01 mass% or more, further 0.05 mass% or more, and 2.0 mass% or less, further 1.0 mass% or less.

<25>

The fragrance delivery particle according to any of <1> to <24>, further containing (D) a water-soluble nonionic polymer [hereinafter component (D)].

<26>

The fragrance delivery particle according to any of <1> to <25>, wherein component (D) is one or more selected from a water-soluble nonionic polymer, further polyethylene glycol and polypropylene glycol, with a number average molecular weight of 2000 or more, further 3000 or more, further 4000 or more, and 20000 or less, further 15000 or less, further 10000 or less.

<27>

The fragrance delivery particle according to any of <1> to <26>, wherein a content of component (D) in 100 mass% of the fragrance delivery particle is 0.5 mass% or more, further 1 mass% or more, and 30 mass% or less, further 25 mass% or less, further 20 mass% or less.

<28>

The fragrance delivery particle according to any of <1> to <27>, wherein a mass ratio of a content of component (A) to a content of component (D) [(A)/(D)] is 0.1 or more, further 0.2 or more, further 0.3 or more, further 0.5 or more, further 1.0 or more, further 5.0 or more, further 7.0 or more, and 100 or less, further 95 or less, further 50 or less, further 30 or less, further 25 or less, further 20 or less.

<29>

The fragrance delivery particle according to any of <1> to <28>, further containing (E) an oxidation stabilizer [hereinafter component (E)].

<30>

The fragrance delivery particle according to any of <1> to <29>, wherein a content of component (E) in 100 mass% of the fragrance delivery particle of the present invention is 0.01 mass% or more, further 0.02 mass% or more, and 0.50 mass% or less, further 0.30 mass% or less.

<31>

A method for producing a fragrance delivery particle, including mixing (A) a water-soluble solid [hereinafter component (A)] and (B) a fragrance [hereinafter component (B)],

wherein component (B) includes (B1) a microencapsulated fragrance [hereinafter component (B1)] and (B2) a non-microencapsulated fragrance [hereinafter component (B2)], and the fragrance delivery particle obtained by the production method has a moisture content according to the Karl Fischer gas-phase method (JIS K 0113) [hereinafter KF moisture content] of 1 mass% or more and 35 mass% or less.

<32>

The method for producing a fragrance delivery particle according to <31>, wherein a mixture obtained by mixing component (A) and component (B2) and component (B1) are mixed to produce the fragrance delivery particle.

<33>

The method for producing a fragrance delivery particle according to any of <31> or <32>, wherein a mixture obtained by mixing component (A) and component (B2) and a mixture obtained by mixing component (B1) and optionally component (D) are mixed to produce the fragrance delivery particle.

<34>

The method for producing a fragrance delivery particle according to any of <31> to <33>, wherein a mixture obtained by mixing component (A) and component (B1) and component (B2) are mixed to produce the fragrance delivery particle.

<35>

The method for producing a fragrance delivery particle according to any of <31> to <34>, wherein a mixture obtained by mixing component (A) and component (B1) and a mixture obtained by mixing component (B2) and optionally component (D) are mixed to produce the fragrance delivery particle.

<36>

A method for imparting a scent to a textile product, including adding a fragrance delivery particle in a laundering process of the textile product to treat the textile product,

wherein the fragrance delivery particle contains

(A) a water-soluble solid [hereinafter component (A)] and
(B) a fragrance [hereinafter component (B)], and

component (B) includes (B1) a microencapsulated fragrance [hereinafter component (B1)] and (B2) a non-microencapsulated fragrance [hereinafter component (B2)], and
as the fragrance delivery particle, a fragrance delivery particle with a moisture content according to the Karl Fischer gas-phase method (JIS K 0113) [hereinafter KF moisture content] of 1 mass% or more and 35 mass% or less is used.

<37>

The method for imparting a scent to a textile product according to <36>, wherein the fragrance delivery particle is added in a range of 5.0 g or more, further 7.0 g or more, and 10.0 g or less, further 8.0 g or less relative to 1 kg of the textile product in the laundering process of the textile product.

<38>

The method for imparting a scent to a textile product according to <36> or <37>, wherein the fragrance delivery particle is put in a range of 0.001 ppm or more, further 0.01 ppm or more, and 1000 ppm or less, further 100 ppm or less relative to water in the laundering process of the textile product.

Examples

Components used in examples or comparative examples are collectively listed afterwards. In the examples and comparative examples, "%" is "mass%" unless otherwise specified. The mass percentages in the formulation compositions in Tables 3 to 7 represent mass percentages on an as-is basis (for a fragrance microcapsule slurry, the mass percentages represent the amounts of encapsulated fragrance compounds calculated as active ingredient contents). Note that the measurement of each physical property value was carried out according to the method below.

(1) Bulk density

It was calculated using an apparent density tester in accordance with JIS K 7365.

(2) Average particle size of fragrance delivery particles

The sphere-equivalent diameters of 250 particles were calculated using the image analysis software Image J.

(3) Moisture content of fragrance delivery particles

The KF moisture content of fragrance delivery particles was measured according to the Karl Fischer gas-phase method (JIS K 0113). The HIRANUMA automated moisture meter AQV-2200A (manufactured by Hitachi High-Tech Corporation) was used as a moisture content meter. 50 mL of dehydrated methanol was placed as a titration solvent in a titration cell with a capacity of about 150 mL of the moisture content meter, and stirred using a magnetic stirrer. Introducing tubing for introducing moisture that was vaporized from a moisture evaporator thereto was placed in dehydrated methanol (product name: Dehydrated Methanol (manufactured by KATAYAMA CHEMICAL INDUSTRIES Co., Ltd., product No. 119-2400-5)) within the titration cell, nitrogen passed through a desiccant was flowed at a flow rate of 200 mL/min as a carrier gas to bubble the anhydrous methanol, and 2.5 ml of the commercially available Karl Fischer reagent Aqualyte KF 5 (manufactured by HIRANUMA Co., Ltd., titer 5.0 mg/mL) was added dropwise thereto to make the titration cell anhydrous. 0.05 g of the fragrance delivery particles was weighed on a sample heating boat of the moisture evaporator EV-2000 (manufactured by Hitachi High-Tech Corporation), and this was heated at 210°C for 2 minutes to vaporize and introduce the moisture of the fragrance delivery particles into anhydrous methanol within the titration cell of the HIRANUMA automated moisture meter AQV-2200A (manufactured by Hitachi High-Tech Corporation) with the carrier gas (nitrogen) at 200 mL/min. This was titrated using the Karl Fischer reagent Aqualyte KF 5 (manufactured by HIRANUMA Co., Ltd.) to measure the amount of vaporized moisture. Further, the same measurement as above was carried out using the same sample three times in total to measure the moisture content. Further, the amount of vaporized moisture was determined by the following formula:

$$W = F \times V \times 100 / (S \times 10^3)$$

W: moisture (%)
F: titer of Karl Fischer reagent (mg/mL)
V: amount of Karl Fischer reagent used for titration (mL)
S: mass of sample (g)

[Used component]

<Component (A)>

(A1): magnesium sulfate heptahydrate (the product name "Magnesium Sulfate Heptahydrate," manufactured by Laizhou City Laiyu Chemical Co. Ltd., spherical product of 3 to 5 mm, moisture content according to infrared moisture meter 31.1 mass%, bulk density 790 g/L), dried at 120°C for 2 hours using the forced-air constant-temperature dryer DRM620TE manufactured by ADVANTEC TOYO KAISHA, LTD. (moisture content according to infrared moisture meter 1.7 mass%, bulk density 510 g/L)

(A2): magnesium sulfate heptahydrate (the same product as the above (A1) was used), dried with 120°C hot air at 4 $m^3$/min for 25 minutes using a fluidized bed dryer (Slit Flow manufactured by OKAWARA MFG. CO., LTD.) (moisture content according to infrared moisture meter 5.1 mass%, bulk density 590 g/L)

(A3): magnesium sulfate heptahydrate (the same product as the above (A1) was used), dried with 120°C hot air at 4 $m^3$/min for 15 minutes using a fluidized bed dryer (Slit Flow manufactured by OKAWARA MFG. CO., LTD.) (moisture content according to infrared moisture meter 16.4 mass%, bulk density 650 g/L)

(A4): magnesium sulfate heptahydrate (the same product as the above (A1) was used), dried with 120°C hot air at 4 $m^3$/min for 5 minutes using a fluidized bed dryer (Slit Flow manufactured by OKAWARA MFG. CO., LTD.) (moisture content according to infrared moisture meter 26.0 mass%, bulk density 730 g/L)

(A5): magnesium sulfate heptahydrate (the product name "Magnesium Sulfate Heptahydrate," manufactured by Laizhou City Laiyu Chemical Co. Ltd., spherical product of 3 to 5 mm, moisture content according to infrared moisture meter 31.1 mass%, bulk density 790 g/L)

The moisture contents of the above (A1) to (A5) were calculated according to the method below.

2 g of a sample (water-soluble solid) was weighed on an aluminum container with a diameter of 11.5 cm. Thereafter, the mass of the sample (component (A)) after drying was measured using an infrared moisture meter (for example, MOC63u manufactured by Shimadzu Corporation) under the following conditions: wet basis moisture measuring mode, temperature 105°C, and Auto (the final measurement value was taken when the rate of change in the measurement value was within 0.05% per 30 seconds, and the measurement was then stopped). The moisture contents were calculated using the following formula:

moisture content (mass%) = {mass before drying (g) - mass after drying (g)} / mass before drying (g)

<Component (B)>

Component (B1): (B1-1) a fragrance microcapsule slurry obtained in the following production example

1.7 g of a diisobutylene-maleic anhydride copolymer (DEMOL EP, solid content 25%, manufactured by Kao Corporation) was neutralized with hydrochloric acid, and thereafter further diluted with ion-exchanged water to obtain an aqueous solution with a solid content of 3% and a pH of 4.3. Next, 98 g of fragrance made of the fragrance compounds listed in Table 1 below was added to 100 g of the above diisobutylene-maleic anhydrate copolymer aqueous solution and they were emulsified using a homogenizer, and this was heated to 50°C. Next, an aqueous solution obtained by mixing 12 g of a partially methylolated melamine resin (the trade name Cyme1385, solid content 80%, manufactured by Cytec Industries Inc) and 35 g of ion-exchanged water was added dropwise. This was held at 50°C for 2 hours, further held at 70°C for 1 hour, and further held at 80°C for 3 hours to complete the encapsulation. This was thereafter cooled to obtain a slurry of fragrance microcapsules with an average particle size of 7 μm and an active ingredient content of 40 mass%. The average particle size (median diameter) of the fragrance microcapsules was measured using the laser diffraction/scattering particle size distribution analyzer "LA-950" (manufactured by HORIBA, Ltd.) For the measurement, a flow cell was used, and water was used as a dispersion medium. The refractive indexes of the dispersion medium and the disperse phase were set respectively to 1.333-i and 1.48-0i. The dispersion containing the particles to be measured was added to the flow cell, and a measurement was conducted at a concentration where the transmittance was near 90% to determine the average particle size (median diameter).

[Table 1]

| Fragrance for component (B1-1) | | |
|---|---|---|
| Fragrance compound | ClogP vlaue | Formulation amount (parts by mass) |
| Limonene | 4.9 | 80 |
| 1,8-Cineole | 3.1 | 30 |
| γ-Undecalactone | 3.1 | 50 |
| Geraniol | 3.5 | 20 |
| Terpineol | 3.3 | 20 |

(continued)

| Fragrance for component (B1-1) | | |
|---|---|---|
| Fragrance compound | ClogP value | Formulation amount (parts by mass) |
| Tetrahydrolinalool | 3.6 | 50 |
| Methyl dihydrojasmonate | 3.0 | 120 |
| Geranyl acetate | 4.5 | 55 |
| o,t-Butylcyclohexyl acetate | 4.4 | 100 |
| Tricyclodecenyl propionate | 3.3 | 70 |
| Lilial | 4.4 | 50 |
| Hexyl cinnamic aldehyde | 4.8 | 100 |
| $\alpha$-Ionone | 3.9 | 80 |
| $\beta$-Ionone | 4.4 | 20 |
| $\gamma$-Methylionone | 4.8 | 50 |
| Iso E Super | 5.2 | 60 |
| $\delta$-Damascone | 4.2 | 2 |
| Ambroxan | 4.8 | 3 |
| cis-3-Hexenyl salicylate | 4.8 | 40 |
| Total | | 1000 |

Component (B2): (B2-1) fragrance made of the fragrance compounds listed in Table 2 below

[Table 2]

| Component (B2-1) | | |
|---|---|---|
| Fragrance compound | ClogP value | Formulation amount (parts by mass) |
| Florosa | 2.0 | 20 |
| Isoamyl acetate | 2.3 | 5 |
| Stearyl acetate | 2.5 | 25 |
| Triplal | 2.9 | 5 |
| Tricyclodecenyl acetate | 2.9 | 160 |
| Methyl dihydrojasmonate | 3.0 | 5 |
| $\gamma$-Undecalactone | 3.1 | 180 |
| Allyl heptanoate | 3.2 | 40 |
| Linalool | 3.3 | 5 |
| Tricyclodecenyl propionate | 3.3 | 240 |
| Citronellyl nitrile | 3.6 | 5 |
| Tetrahydrolinalool | 3.6 | 55 |
| Decanal | 3.8 | 5 |
| Cyclamen aldehyde | 3.9 | 25 |
| $\delta$-Damascone | 4.2 | 5 |
| Linalyl acetate | 4.4 | 10 |
| o-t-Butylcyclohexyl acetate | 4.4 | 40 |

(continued)

| Component (B2-1) | | |
|---|---|---|
| Fragrance compound | ClogP value | Formulation amount (parts by mass) |
| β-Ionone | 4.4 | 20 |
| Dynascone | 4.5 | 5 |
| Allyl cyclohexanepropionate | 4.5 | 20 |
| Ambroxan | 4.8 | 25 |
| Limonene | 4.9 | 10 |
| Iso E Super | 5.2 | 90 |
| Total | | 1000 |

Component (C)

· "Polyquaternium-7" (manufactured by Lubrizol Advanced Materials, Inc.)

Component (D)

· PEG (polyethylene glycol, number average molecular weight 8500)

Component (E)

· BHT (oxidation stabilizer, manufactured by FUJIFILM Wako Pure Chemical Corporation)

[Production of fragrance delivery particles]

Example 1

The above component (A1) (solid temperature of component (A1) 50°C) in the composition shown in Table 3 was put into a 75-L drum-type granulating machine (φ 40 cm × L 60 cm) having baffles. While mixing was carried out under the conditions of Froude number 0.118/drum angle 12.6°, a mixed solution of component (B2) and component (E) in the amounts shown in Table 3 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 3 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The obtained fragrance delivery particles had a KF moisture content of 21.2 mass%, an average particle size of 4 mm, and a bulk density of 600 g/L.

Example 2

Component (A2) (solid temperature of component (A2) 50°C) in the composition shown in Table 3 was put into a 75-L drum-type granulating machine (φ 40 cm × L 60 cm) having baffles. While mixing was carried out under the conditions of Froude number 0.118/drum angle 12.6°, a mixed solution of component (B2) and component (E) in the amounts shown in Table 3 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 3 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The obtained fragrance delivery particles had a KF moisture content of 27.1 mass%, an average particle size of 4 mm, and a bulk density of 640 g/L.

Example 3

The above component (A3) (solid temperature of component (A3) 50°C) in the composition shown in Table 3 was put into a 75-L drum-type granulating machine (φ 40 cm × L 60 cm) having baffles. While mixing was carried out under the conditions of Froude number 0.118/drum angle 12.6°, a mixed solution of component (B2) and component (E) in the amounts shown in Table 3 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 3 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The obtained fragrance delivery particles had a KF moisture content of 31.5 mass%, an average particle size of 4 mm, and a bulk density of 670 g/L.

Example 4

As step (i), component (A1) (solid temperature of component (A1) 50°C) in half the amount in the composition shown in Table 3 was put into a 75-L drum-type granulating machine (φ 40 cm × L 60 cm) having baffles. While stirring was carried out under the conditions of Froude number 0.118/drum angle 12.6°, a mixed solution of component (B2) and component (E) in the amounts shown in Table 3 was added through piping, and mixing was carried out for 30 seconds (mixed solution 25°C, addition time 30 seconds, particle solid temperature after addition 45°C, and V = 0.48 m/s and R = 0.2 m in the above formula (1)). As step (ii), the rest of component (A1) in half the amount shown in Table 3 was further added to a mixture obtained in step (i), and mixing was carried out for 10 seconds. As step (iii), a mixed solution of component (B1), component (C), and component (D) in the amounts shown in Table 3 was added to a mixture obtained in step (ii) through piping, and mixing was carried out for 3 minutes and 30 seconds (mixed solution 60°C, addition time 30 seconds, and particle solid temperature after addition 45°C). Note that the batch size was 6.5 kg (total formulation amount). Mixed particles of fragrance delivery particles X containing component (A1), component (B1), and component (B2), and fragrance-containing particles Y containing component (A1) and component (B1) were obtained by the above step (i) to step (iii). The obtained mixed particles had a KF moisture content of 22.7 mass%, an average particle size of 4 mm, and a bulk density of 619 g/L.

Further, in example 4, the mixed solution of component (B1), component (C), and component (D) in step (iii) was considered to be uniformly distributed to the mixture of component (A1), component (B2), and component (E) in step (i) and component (A1) added in step (ii). As a result, the content ratio of the fragrance delivery particles X in the mixed particles obtained in example 4 was determined to be 53 mass%.

Comparative example 1

The above component (A4) (solid temperature of component (A4) 50°C) in the composition shown in Table 3 was put into a 75-L drum-type granulating machine (φ 40 cm × L 60 cm) having baffles. While mixing was carried out under the conditions of Froude number 0.118/drum angle 12.6°, a mixed solution of component (B2) and component (E) in the amounts shown in Table 3 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 3 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The obtained fragrance delivery particles had a KF moisture content of 37.6 mass%, an average particle size of 4 mm, and a bulk density of 740 g/L.

Comparative example 2

Magnesium sulfate heptahydrate not dried (component (A5)) in the amount shown in Table 3 was put into a 75-L drum-type granulating machine (φ 40 cm × L 60 cm) having baffles. While mixing was carried out under the conditions of Froude number 0.118/drum angle 12.6°, a mixed solution of component (B2) and component (E) in the amounts shown in Table 3 was added through piping, and mixing was carried out for 30 seconds (mixed solution 25°C, addition time 30 seconds, particle solid temperature after addition 25°C, and V = 0.48 m/s and R = 0.2 m in the above formula (1)). Further, a mixed solution of component (B1), component (C), and component (D) in the amounts shown in Table 3 was added through piping, and mixing was carried out for 3 minutes and 30 seconds (mixed solution 60°C, addition time 30 seconds, and particle solid temperature after addition 40°C). Note that the batch size was 6.5 kg (total formulation amount). The fragrance could not be sufficiently supported on the obtained fragrance delivery particles, and stickiness was observed from the obtained particles. Further, the KF moisture content of the obtained particles was 41.2 mass% when forcefully measured.

<Scent intensity evaluations 1, 2, and 3>

In a room where the environment was maintained at a room temperature of 25°C and 65% humidity, using the fully automatic washing machine AW-7D8 (W) manufactured by TOSHIBA CORPORATION, setting the amount of used water to 28 L (water temperature 25°C), and putting 18.7 g of a commercially available unscented liquid detergent and 10.1 g of the fragrance delivery particles of the present invention, eight cotton towels and five cotton T-shirts (the total dry weight of the cotton towels and cotton T-shirts was 1.4 kg) were washed for 9 minutes, rinsed with retained water twice, and spin-dried for 3 minutes. The scent intensity of a cotton towel was evaluated according to the evaluation criteria below immediately after spin-drying and after drying for one day indoors (temperature 25°C and humidity 65%). The scent intensity of the cotton towel immediately after spin-drying was taken as evaluation 1, and the scent intensity of the dried cotton towel was taken as evaluation 2. Further, the scent intensity of the dried cotton towel when the surface of the cotton towel was run over by two fingers was taken as evaluation 3. In each evaluation, the average value of the evaluations of three expert panelists was taken as the evaluation result.

In examples 1 and 4, the following evaluations were further made: the scent intensity of a cotton towel dried after a laundering process performed in the same manner as above using the fragrance delivery particles that had been stored at 40°C for 20 days was taken as evaluation 4, and the scent intensity of the dried cotton towel when the surface of the cotton towel was run over by two fingers was taken as evaluation 5. In each evaluation, the average value of the evaluations of three expert panelists was taken as the evaluation result. The evaluation results are shown in Table 3.

<<Evaluation criteria>>

0: Scentless
1: very faintly felt
2: weakly felt
3: clearly felt
4: strongly felt
5: quite strongly felt
6: extremely strongly felt

[Table 3]

| | | | | Example 1 | Example 2 | Example 3 | Example 4 | Comparative example 1 | Comparative example 2 |
|---|---|---|---|---|---|---|---|---|---|
| Fragrance delivery particle | Formulation composition (mass%) | (A) | (A1) | 87 | | | 87 [*1] | | |
| | | | (A2) | | 87 | | | | |
| | | | (A3) | | | 87 | | | |
| | | | (A4) | | | | | 87 | |
| | | | (A5) | | | | | | 87 |
| | | (B) | (B1-1) | 0.7 | 0.7 | 0.7 | 0.7 | 0.7 | 0.7 |
| | | | (B2-1) | 5.5 | 5.5 | 5.5 | 5.5 | 5.5 | 5.5 |
| | | (C) | | 0.5 | 0.5 | 0.5 | 0.5 | 0.5 | 0.5 |
| | | (D) | | 5.0 | 5.0 | 5.0 | 5.0 | 5.0 | 5.0 |
| | | (E) | | 0.2 | 0.2 | 0.2 | 0.2 | 0.2 | 0.2 |
| | (B1)/(B2) (mass ratio) | | | 0.13 | 0.13 | 0.13 | 0.13 | 0.13 | 0.13 |
| | (A)/(D) (mass ratio) | | | 17.4 | 17.4 | 17.4 | 17.4 | 17.4 | 17.4 |
| | Moisture content of fragrance delivery particle according to the Karl Fischer gas-phase method (mass%) (JIS K 0113) | | | 21.2 | 27.1 | 31.5 | 22.7 | 37.6 | 41.2 |
| Scent intensity | Evaluation 1 | | | 4 | 4 | 4 | 4 | 3 | 3 |
| | Evaluation 2 | | | 5 | 5 | 5 | 5 | 4 | 4 |
| | Evaluation 3 | | | 5.5 | 5.5 | 5.5 | 5.5 | 4.5 | 4.5 |
| | Evaluation 4 | | | 4.5 | - | - | 5 | - | - |
| | Evaluation 5 | | | 5 | - | - | 5.5 | - | - |

*1: component (A1) was divided and added multiple times.

It was able to be confirmed that the fragrance delivery particles of examples 1 to 4 were able to allow much fragrance to remain on the textile products even after the washing step and rinsing step in the laundering process of the textile products.

Further, it was able to be confirmed that the mixed particles containing the fragrance delivery particles of example 4 achieved more improved scent intensity after being stored at 40°C for 20 days (evaluations 4 and 5), and it is expected that containing the fragrance-containing particles containing component (A1) and component (B1) in the mixed particles is effective at suppressing the leakage of the encapsulated component of the fragrance-encapsulating microcapsules.

Formulation examples 1-1 to 1-4

The above component (A1) (solid temperature of component (A1) 50°C) in any composition shown in Table 4 was put into a 75-L drum-type granulating machine ($\varphi$ 40 cm × L 60 cm) having baffles. While mixing was carried out under the conditions of Froude number 0.118/drum angle 12.6°, a mixed solution of component (B2) and component (E) in the amounts shown in Table 4 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 4 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The fragrance delivery particles obtained in formulation examples 1-1 to 1-4 had KF moisture contents of 20 to 30 mass%. When the same evaluations 1, 2, and 3 as those in the examples were made using the fragrance delivery particles obtained in formulation examples 1-1 to 1-4, all of them achieved high scent intensity.

[Table 4]

| | | | | Formulation example 1-1 | Formulation example 1-2 | Formulation example 1-3 | Formulation example 1-4 |
|---|---|---|---|---|---|---|---|
| Fragrance delivery particle | Formulation composition (mass%) | (A) | (A6) | 95 | 93 | 70 | 80 |
| | | (B) | (B1-1) | 0.7 | 0.45 | 0.44 | 1.8 |
| | | | (B2-1) | 3.0 | 3.0 | 4.0 | 5.5 |
| | | (C) | | 0.1 | 0.2 | 1.0 | 0.5 |
| | | (D) | | 1.0 | 1.8 | 23 | 12 |
| | | (E) | | 0.2 | 0.2 | 0.2 | 0.2 |
| | (B1)/(B2) (mass ratio) | | | 0.23 | 0.15 | 0.11 | 0.33 |
| | (A)/(D) (mass ratio) | | | 95 | 52 | 3.0 | 6.7 |
| | Moisture content of fragrance delivery particle according to the Karl Fischer gas-phase method (mass%) (JIS K 0113) | | | 20-30 mass% | | | |

Formulation examples 2-1 to 2-3

[Used component]

As the used components in Table 5, the same products as those in the examples were used, except that the following component was used as component (A).

<Component (A)>

(A6): magnesium sulfate heptahydrate (the product name "Magnesium Sulfate Heptahydrate," manufactured by Laizhou City Laiyu Chemical Co. Ltd., spherical product of 3 to 5 mm, moisture content according to infrared moisture meter 31.1 mass%, bulk density 790 g/L), dried at 120°C for 2 hours using the forced-air constant-temperature dryer DRM620TE manufactured by ADVANTEC TOYO KAISHA, LTD. (moisture content according to infrared moisture meter 10.0 mass%, bulk density 600 g/L)

The above component (A6) (solid temperature of component (A6) 50°C) in any composition shown in Table 5 was put into a 75-L drum-type granulating machine ($\varphi$ 40 cm $\times$ L 60 cm) having baffles. While mixing was carried out under the conditions of Froude number 0.118/drum angle 12.6°, a mixed solution of component (B2) and component (E) in the amounts shown in Table 5 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 5 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The fragrance delivery particles obtained in formulation examples 2-1 to 2-3 had KF moisture contents of 20 to 30 mass%. Solubility in Wakayama city water at 20°C was evaluated according to the following method using the fragrance delivery particles obtained in formulation examples 2-1 to 2-3. The results are shown in Table 5.

<Solubility evaluation>

0.5 g of the fragrance delivery particles obtained in each of formulation examples 2-1 to 2-3 was put into a beaker with a capacity of 0.5 L containing 500 mL of water at 20°C, and dissolved by stirring at 600 rpm using a rod-shaped stirring bar with a length of 3.5 cm and a magnetic stirrer. It was visually confirmed that the particles were completely dissolved, and solubility was evaluated using the criteria below based on the time required for the complete dissolution. The results are shown in Table 5.

Note that the "complete dissolution" means the state where no solid components remain.

<<Evaluation criteria>>

A: the fragrance delivery particles were dissolved within 3 minutes after addition
B: the fragrance delivery particles were dissolved within 3 to 6 minutes after addition
C: the fragrance delivery particles were dissolved within 6 to 9 minutes after addition

[Table 5]

| Fragrance delivery particle | Formulation composition (mass%) | (A) | (A6) | Formulation example 2-1 | Formulation example 2-2 | Formulation example 2-3 |
|---|---|---|---|---|---|---|
| | | | | 87 | 70 | 40 |
| | | (B) | (B1-1) | 0.7 | 0.7 | 0.7 |
| | | | (B2-1) | 5.5 | 5.5 | 5.5 |
| | | (C) | | 0.5 | 0.5 | 0.5 |
| | | (D) | | 5.0 | 11.9 | 50.0 |
| | | (E) | | 0.2 | 0.2 | 0.2 |
| | (B1)/(B2) (mass ratio) | | | 0.13 | 0.13 | 0.13 |
| | (A)/(D) (mass ratio) | | | 17.4 | 5.91 | 0.80 |
| | Moisture content of fragrance delivery particle according to the Karl Fischer gas-phase method (mass%) (JIS K 0113) | | | 20-30 mass% | | |
| | Solubility | | | A | B | C |

Formulation examples 3-1 to 3-3 (Table 6) and formulation examples 4-1 to 4-3 (Table 7)

[Used component]

As the used components in Tables 6 and 7, the same products as those in the examples and formulation examples 1 and 2 were used, except that the following components were used as component (A).

<Component (A)>

(A7): sodium sulfate decahydrate (the product name "Sodium Sulfate Decahydrate," manufactured by FUJIFILM Wako Pure Chemical Corporation, columnar product of 0.1 to 5.0 mm, moisture content according to infrared moisture meter 56.6 mass%, bulk density 711 g/L), dried at 120°C for 4 hours using a convection oven manufactured by Yamato Scientific Co., Ltd. (moisture content according to infrared moisture meter 0.4 mass%, bulk density 400 g/L or more and 800 g/L or less)
(A8): sodium carbonate decahydrate (the product name "Sodium Carbonate Decahydrate," manufactured by FUJIFILM Wako Pure Chemical Corporation, columnar product of 0.1 to 5.0 mm, moisture content according to infrared moisture meter 62.2 mass%, bulk density 825 g/L), dried at 120°C for 3 hours using a convection oven manufactured by Yamato Scientific Co., Ltd. (moisture content according to infrared moisture meter 15 mass%, bulk density 400 g/L or more and 800 g/L or less)

The above component (A6), (A7), or (A8) (solid temperature of components (A6) to (A8) 50°C) in any composition shown in Table 6 or 7 was put into a 75-L drum-type granulating machine (φ 40 cm × L 60 cm) having baffles. While mixing was carried out under the conditions of Froude number 0.118/drum angle 12.6°, a mixed solution of component (B2) and component (E) in the amounts shown in Table 6 or 7 was added through piping, and mixing was carried out for 30 seconds (mixed solution 25°C, addition time 30 seconds, particle solid temperature after addition 45°C, and V = 0.48 m/s and R = 0.2 m in the above formula (1)). Further, a mixed solution of component (B1), component (C), and component (D) in the amounts shown in Table 6 or 7 was added through piping, and mixing was carried out for 3 minutes and 30 seconds (mixed solution 60°C, addition time 30 seconds, and particle solid temperature after addition 45°C). Note that the batch size was 6.5 kg (total formulation amount). The KF moisture contents of the fragrance delivery particles obtained in formulation examples 3-1 to 3-3 and formulation examples 4-1 to 4-3 are shown in Tables 6 and 7, respectively. Further, scent intensity and scent quality were evaluated according to the following methods using the fragrance delivery particles obtained in formulation examples 3-1 to 3-3 and formulation examples 4-1 to 4-3. The results are shown in Tables 6 and 7.

<Scent intensity evaluations 1 and 2>

In a room where the environment was maintained at a room temperature of 25°C and 65% humidity, using the fully automatic washing machine AW-7D8 (W) manufactured by TOSHIBA CORPORATION, setting the amount of used water to 28 L (water temperature 25°C), and putting 18.7 g of a commercially available unscented liquid detergent and 10.1 g of the fragrance delivery particles of the present invention, eight cotton towels and five cotton T-shirts (the total dry weight of the cotton towels and cotton T-shirts was 1.4 kg) were washed for 9 minutes, rinsed with retained water twice, and spin-dried for 3 minutes. The scent intensity of a cotton towel was evaluated according to the evaluation criteria below immediately after spin-drying and after drying for one day indoors (temperature 25°C and humidity 65%). The scent intensity of the cotton towel immediately after spin-drying was taken as evaluation 1, and the scent intensity of the dried cotton towel was taken as evaluation 2. In each evaluation, the average value of the evaluations of three expert panelists was taken as the evaluation result.

<<Evaluation criteria>>

0: Scentless
1: very faintly felt
2: weakly felt
3: clearly felt
4: strongly felt
5: quite strongly felt
6: extremely strongly felt

<Scent quality evaluations 1 and 2>

In a room where the environment was maintained at a room temperature of 25°C and 65% humidity, using the fully automatic washing machine AW-7D8 (W) manufactured by TOSHIBA CORPORATION, setting the amount of used water to 28 L (water temperature 25°C), and putting 18.7 g of a commercially available unscented liquid detergent and 10.1 g of the fragrance delivery particles of the present invention, eight cotton towels and five cotton T-shirts (the total dry weight of the cotton towels and cotton T-shirts was 1.4 kg) were washed for 9 minutes, rinsed with retained water twice, and spin-dried for 3 minutes. The scent quality of a cotton towel was evaluated according to the evaluation criteria below immediately after spin-drying and after drying for one day indoors (temperature 25°C and humidity 65%). The scent quality of the cotton towel immediately after spin-drying was taken as evaluation 1, and the scent quality of the dried cotton towel was taken as evaluation 2. In each evaluation, the average value of the evaluations of three expert panelists was taken as the evaluation result. Note that, regarding the "scent balance" in the evaluation criteria below, good scent balance means that the designed scent is obtained and scent quality is good, and poor balance means that scent quality is poor since the scent differs from the design.

<<Evaluation criteria>>

A: extremely good scent balance
B: good scent balance
C: slightly poor scent balance
D: poor scent balance

[Table 6]

| | | | | Formulation example 3-1 | Formulation example 3-2 | Formulation example 3-3 |
|---|---|---|---|---|---|---|
| Fragrance delivery particle | Formulation composition (mass%) | (A) | (A6) | 88.1 | 88.1 | 88.1 |
| | | (B) | (B1-1) | 0.06 | 0.7 | 4.45 |
| | | | (B2-1) | 6.15 | 5.5 | 1.75 |
| | | (C) | | 0.5 | 0.5 | 0.5 |
| | | (D) | | 5.0 | 5.0 | 5.0 |
| | | (E) | | 0.2 | 0.2 | 0.2 |
| | (B1)/(B2) (mass ratio) | | | 0.01 | 0.13 | 2.50 |
| | (A)/(D) (mass ratio) | | | 17.6 | 17.6 | 17.6 |
| | Moisture content of fragrance delivery particle according to the Karl Fischer gas-phase method (mass%) (JIS K 0113) | | | 28.1 | 29.2 | 34.4 |
| Scent evaluation | Scent intensity (score) | | Evaluation 1 | 4 | 4 | 5 |
| | | | Evaluation 2 | 5 | 4 | 5 |
| | Scent quality | | Evaluation 1 | A | A | C |
| | | | Evaluation 2 | D | A | D |

[Table 7]

|  |  |  |  | Formulation example 4-1 | Formulation example 4-2 | Formulation example 4-3 |
|---|---|---|---|---|---|---|
| Fragrance delivery particle | Formulation composition (mass%) | (A) | (A6) | 87 |  |  |
|  |  |  | (A7) |  | 87 |  |
|  |  |  | (A8) |  |  | 87 |
|  |  | (B) | (B1-1) | 0.7 | 0.7 | 0.7 |
|  |  |  | (B2-1) | 5.5 | 5.5 | 5.5 |
|  |  | (C) |  | 0.5 | 0.5 | 0.5 |
|  |  | (D) |  | 5.0 | 11.9 | 50.0 |
|  |  | (E) |  | 0.2 | 0.2 | 0.2 |
|  | (B1)/(B2) (mass ratio) |  |  | 0.13 | 0.13 | 0.13 |
|  | (A)/(D) (mass ratio) |  |  | 17.4 | 7.31 | 1.74 |
|  | Moisture content of fragrance delivery particle according to the Karl Fischer gas-phase method (mass%) (JIS K 0113) |  |  | 20-30 mass% | | |
| Scent evaluation | Scent intensity (score) | Evaluation 1 |  | 4 | 4 | 4 |
|  |  | Evaluation 2 |  | 5 | 5 | 5 |
|  | Scent quality | Evaluation 1 |  | A | B | B |
|  |  | Evaluation 2 |  | A | A | C |

**Claims**

1. A fragrance delivery particle comprising (A) a water-soluble solid [hereinafter component (A)] and (B) a fragrance [hereinafter component (B)], wherein the component (B) includes (B1) a microencapsulated fragrance [hereinafter component (B1)] and (B2) a non-microencapsulated fragrance [hereinafter component (B2)], and a moisture content of the fragrance delivery particle according to the Karl Fischer gas-phase method (JIS K 0113) is 1 mass% or more and 35 mass% or less.

2. The fragrance delivery particle according to claim 1, wherein the component (A) is a water-soluble inorganic salt.

3. The fragrance delivery particle according to claim 1 or 2, wherein the component (A) is a water-soluble inorganic sulfate.

4. The fragrance delivery particle according to claim 1 or 2, wherein a mass ratio of a content of the component (B1) to a content of the component (B2) in the component (B) [(B1)/(B2)] is 0.005 or more and 5.0 or less.

5. The fragrance delivery particle according to claim 1 or 2, wherein a content of the component (A) is 50 mass% or more and 99 mass% or less.

6. A method for producing a fragrance delivery particle, comprising mixing (A) a water-soluble solid [hereinafter component (A)] and (B) a fragrance [hereinafter component (B)], wherein the component (B) includes (B1) a microencapsulated fragrance [hereinafter component (B1)] and (B2) a non-microencapsulated fragrance [hereinafter component (B2)], and a moisture content of the fragrance delivery particle according to the Karl Fischer gas-phase method (JIS K 0113) is 1 mass% or more and 35 mass% or less.

7. The method for producing a fragrance delivery particle according to claim 6, wherein the component (A) and the component (B) are mixed using a container-rotating granulating machine.

8. The method for producing a fragrance delivery particle according to claim 6, wherein a mixture obtained by mixing the component (A) and the component (B2) and the component (B1) are mixed.

9. A method for imparting a scent to a textile product, comprising adding the fragrance delivery particle according to claim 1 or 2 in a laundering process of the textile product.

10. The method for imparting a scent to a textile product according to claim 9, wherein the fragrance delivery particle according to claim 1 or 2 is added to at least one or more of washing water and rinsing water in the laundering process of the textile product.

# EP 4 779 006 A1

## INTERNATIONAL SEARCH REPORT

| | International application No. |
|---|---|
| | **PCT/JP2024/032741** |

### A. CLASSIFICATION OF SUBJECT MATTER

*C11D 3/50*(2006.01)i; *B01J 13/22*(2006.01)i; *C11B 9/00*(2006.01)i; *D06M 11/56*(2006.01)i; *D06M 11/57*(2006.01)i; *D06M 13/00*(2006.01)i; *D06M 23/12*(2006.01)i
FI: C11D3/50; D06M23/12; D06M11/56; D06M11/57; C11B9/00 Z; D06M13/00; B01J13/22

According to International Patent Classification (IPC) or to both national classification and IPC

### B. FIELDS SEARCHED

Minimum documentation searched (classification system followed by classification symbols)

C11D; B01J; C11B; D06M

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 1-190796 A (KAO CORPORATION) 31 July 1989 (1989-07-31) claims, p. 3, lower left column, line 14 to p. 5, upper left column | 1-10 |
| Y | | 1-10 |
| Y | JP 2013-234281 A (LION CORPORATION) 21 November 2013 (2013-11-21) claims, paragraphs [0014]-[0016], [0030], [0047], [0081]-[0103] | 1-10 |
| Y | JP 2021-529869 A (THE PROCTER & GAMBLE COMPANY) 04 November 2021 (2021-11-04) claims, paragraph [0078] | 1-10 |
| Y | JP 2020-512452 A (FIRMENICH S.A.) 23 April 2020 (2020-04-23) claims, paragraphs [0108]-[0120] | 1-10 |

☐ Further documents are listed in the continuation of Box C.　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

International application No.

**PCT/JP2024/032741**

| Patent document cited in search report | | | Publication date (day/month/year) | Patent family member(s) | | | Publication date (day/month/year) |
|---|---|---|---|---|---|---|---|
| JP | 1-190796 | A | 31 July 1989 | (Family: none) | | | |
| JP | 2013-234281 | A | 21 November 2013 | (Family: none) | | | |
| JP | 2021-529869 | A | 04 November 2021 | US | 2020/0010781 | A1 | |
| | | | | claims, table 1 | | | |
| | | | | WO | 2020/010488 | A1 | |
| | | | | EP | 3820984 | A1 | |
| | | | | CN | 112601805 | A | |
| JP | 2020-512452 | A | 23 April 2020 | US | 2020/0087598 | A1 | |
| | | | | claims, paragraphs [0157]-[0172] | | | |
| | | | | WO | 2018/172514 | A1 | |
| | | | | EP | 3601516 | A1 | |
| | | | | CN | 110431221 | A | |

Form PCT/ISA/210 (patent family annex) (July 2022)

**REFERENCES CITED IN THE DESCRIPTION**

**Patent documents cited in the description**

- JP 2020512452 A
- JP H1188597 A
- JP 2021529869 A
- JP 2008063575 A
- JP 2006249326 A
- JP 2006518790 A
- JP H11216354 A
- JP H5222672 A
- JP 2023008936 A
- JP 2016534159 A

**Non-patent literature cited in the description**

- **MOTOKI NAKAJIMA**. Basic Knowledge of Fragrances and Fragrance Blending. Sangyo Tosho Publishing Co., Ltd., 20 April 2005
- **A. LEO**. Comprehensive Medicinal Chemistry. Pergamon Press, 1990, vol. 4, 295
- **MASUMI KOISHI et al.** Making and Using Microcapsules. Kogyo Chosakai Publishing Co., Ltd., 2005